# EUROPÄISCHE PATENTSCHRIFT

(11) **EP 4 217 326 B1**
(45) Veröffentlichungstag und Bekanntmachung des Hinweises auf die Patenterteilung: **04.02.2026**
(21) Anmeldenummer: 22727741.5
(22) Anmeldetag: 24.05.2022
(51) Int. Cl.: C04B 26/04, C04B 26/16, C04B 40/06, E04D 7/00, E04D 11/02, C04B 28/14, C04B 28/06, C04B 28/04, C04B 26/06, C04B 111/27, C04B 111/50

(54) **DACHABDICHTUNG UND VERWENDUNG EINES FLÜSSIG AUFZUBRINGENDEN REAKTIVDACHABDICHTUNGSMITTELS ZUR HERSTELLUNG EINER DACHABDICHTUNG**
ROOFING MEMBRANE AND USE OF A REACTIVE LIQUID APPLIED ROOF WATERPROOFING PRODUCT FOR PRODUCING A ROOFING MEMBRANE
MEMBRANE DE TOITURE ET UTILISATION D'UN PRODUIT D'IMPERMÉABILISATION DE TOIT APPLIQUÉ LIQUIDE RÉACTIF POUR LA PRODUCTION D'UNE MEMBRANE DE TOITURE

(30) Priorität: 25.05.2021 DE 102021113486; 31.08.2021 WO PCT/EP2021/074048; 23.03.2022 DE 102022106887
(43) Veröffentlichungstag der Anmeldung: 02.08.2023
(73) Patentinhaber: Remmers GmbH, 49624 Löningen (DE)
(72) Erfinder: BOESKER, Dennis, 49808 Lingen (Ems) (DE); WILLEN, Kevin, 49413 Dinklage (DE); WILGEN, Ralf, 49699 Lindern (DE); GREIWE, Magnus, 48431 Rheine (DE); SAALBACH, Christiane, 49624 Löningen (DE); SCHRAND, Lukas, 49696 Molbergen (DE); KIEHN, Sebastian, 49624 Löningen (DE); ENGEL, Jens, 49565 Bramsche (DE)
(74) Vertreter: Bockhorni & Brüntjen Partnerschaft Patentanwälte mbB
(86) Internationale Anmeldenummer: PCT/DE2022/100396
(87) Internationale Veröffentlichungsnummer: WO 2022/247993

(56) Entgegenhaltungen:
- EP-A1- 1 361 255
- WO-A1-2012/038099
- WO-A1-2015/199984
- WO-A1-2016/142339
- WO-A1-2017/190766
- BASF: "Technical Data Sheet: Acronal 5011", TECHNICAL DATA SHEET: ACRONAL 5011, 31 January 2021 (2021-01-31), XP055937775, Retrieved from the Internet <URL:https://download.basf.com/p1/8a80823a77396d5701773f9d7d9d20fc/en/Acronal_5011_TDS_%2830717933%29> [retrieved on 20220704]

## Beschreibung

### GEGENSTAND DER ERFINDUNG

Die Erfindung betrifft eine Dachabdichtung und die Verwendung eines flüssig aufzubringenden Reaktivdachabdichtungsmittels zur Herstellung einer Dachabdichtung.

### STAND DER TECHNIK

Dachabdichtungen schützen Dächer von Bauwerken vor Witterungseinflüssen wie Regen, Schnee, Hagel, aber auch UV-Strahlung. Dabei werden sehr hohe Anforderungen in Bezug auf Elastizität, UV-Stabilität, Rissüberbrückungsfähigkeit, Stoßbeständigkeit, Wasserdichtheit und Druckwasserstabilität gestellt.

Bekannt sind Dachabdichtungen auf bituminöser Basis wie Dachpappe und Dachabdichtungen auf Kunststoffbasis wie EPDM, d.h. Kunststoffe auf Basis von Ethylen-, Propylen- und Dien-Monomeren, PUR, d.h. Polyurethansysteme oder PMMA, d.h. Kunststoffe auf Basis von Methylmethacrylat oder Polyasparticsysteme.

Der aktuelle Stand der Technik zur Abdichtung von Flachdächern ist in der DIN EN 18531, der Flachdachrichtlinie sowie der ETAG 005 dargestellt.

Im Folgenden wird die ETAG 005 stets in der Version der Überarbeitung vom März 2004 zitiert. Die DIN EN 18531 wird stets in der Version vom Juli 2017 zitiert. Die Flachdachrichtlinie wird steht in der Version der Überarbeitung vom Mai 2019 zitiert.

Flachdächer werden üblicherweise mittels bituminöser oder polymerer Beschichtungsmaterialien abgedichtet. Zu unterscheiden sind dabei Bahnenware in Form von Folien oder Platten, beispielsweise Bitumenbahnen, Kunststoffbahnen oder TPO-Folien, d.h. thermoplastische Polyolefinfolien, und flüssig aufgebrachte Materialien, welche sich wiederum in physikalisch trocknende 1K Materialien und chemisch z.B. mit der Luftfeuchtigkeit oder weiteren zugesetzten Komponenten aushärtende Polymere unterteilen lassen.

Bei Bahnenware besteht die Gefahr mechanischer Beschädigungen während des Transports und beim Handling auf der Baustelle. Bahnenware zeigt im Allgemeinen auch ein für den Verarbeiter schweres Handling, bedingt zum einen durch das hohe Gewicht der Rollen zum anderen durch die geringe Flexibilität der Bahnen. Zusätzlich stellt die Notwendigkeit der Verschweißung oder Verklebung der einzelnen Bahnen eine inhärente Problematik dar, welche zur Ausbildung von Schwachstellen in der Abdichtung führen kann. Die oben genannten schlechten Verarbeitungseigenschaften bedingen ebenfalls, dass die Ausbildung von Detailstellen und Anschlüssen für Bahnenware nur schwer durchführbar ist. Für die Aufbringung von Bitumenbahnen ergibt sich zusätzlich eine erhöhte Brand- und Verbrennungsgefahr, da das Verschweißen dieser die Nutzung von Gasbrennern notwendig macht, welche gerade bei sommerlichen Temperaturen und Sonneneinstrahlung zu deutlichen körperlichen Belastungen der Verarbeiter führen kann.

Die Applikation von Flüssigkunststoffen, im Weiteren als FLKs bezeichnet, bringt einen besonders hohen Arbeitsaufwand mit, bedingt durch die Notwendigkeit mehrerer Arbeitsgänge mit jeweils langen Durchtrocknungszeiten. FLKs benötigen zum Aufbau der geforderten Schichtdicke diverse Arbeitsgänge, was den Aufwand zur Abdichtung eines Bauwerks erheblich erhöht. Zudem sind die FLKs im nicht ausgehärteten Zustand hochgradig empfindlich gegenüber Feuchtigkeit. Ein Kontakt mit Wasser führt hier fast immer zur Ausbildung von Fehlstellen, welche später zu korrigieren sind. Darüber hinaus haben FLKs typischerweise eine schlechte gesundheitliche Verträglichkeit bzw. gesundheitsschädliche Eigenschaften, welche zur Sensibilisierung der Verarbeiter führen können. Neben der inhalativen Belastung der Verarbeiter weisen die FLKs häufig zusätzlich einen extrem unangenehmen Geruch auf, welcher von Anwohnern und Verarbeitern als Belästigung empfunden werden kann.

Einkomponentige, bituminöse Emulsionen, bituminöse Dispersionen, Polymeremulsionen und Polymerdispersionen zeigen dagegen eine langsame physikalische Durchtrocknung, welche bei niedrigen Temperaturen und/oder hoher Luftfeuchtigkeit und auf wenig bis nicht saugfähigen Untergründen besonders nachteilig ist.

WO 2012/038099 A1 offenbart eine Verwendung von Beschichtungsmitteln auf Basis von einem oder mehreren mineralischen Bindemitteln, einem oder mehreren Polymeren, einem oder mehreren Füllstoffen und gegebenenfalls einem oder mehreren Additiven zur Herstellung von Dachbeschichtungen, wobei die Beschichtungsmittel mindestens 50 Gew.-%, bevorzugt 55 - 90 Gew.-% Polymere, bezogen auf das Trockengewicht der Polymere und der mineralischen Bindemittel, enthalten, d.h. es können bezogen auf das Trockengewicht 1 bis 9 mal so viel Polymerfeststoff wie Bindemittel enthalten sein. Nachteilig an dem Baustoffsystem ist, dass es nicht für tiefe Temperaturen bis -20°C oder gar bis -30°C flexibel und rissüberbrückend ausgebildet ist, dies liegt u.a. in einer nicht ausreichend niedrigen Tg der verwendeten Polymere begründet. Die Beispiele zeigen Einkomponentensysteme, d.h. Trockenformulierungen, auf Basis von Vinylacetat-Ethylen-Copolymer oder Vinylacetat-Ethylen-Vinylester-Terpolymer, denen zur Herstellung des Beschichtungsmittels Wasser beigemengt wird. Das in den Beispielen eingesetzte Vinnapas hat jeweils einen Feststoffgehalt von 100 Gew.-%.

DE 20 2005 015 351 U1 zeigt ein Baustoffsystem mit ein oder mehreren Komponenten, das als einen ersten Bestandteil einen zerkleinerten Gummi und als zweiten Bestandteil eine Kunststoffdispersion mit selbstvernetzenden Eigenschaften, daneben Zemente und Füllstoffe umfasst. Der Polymeranteil liegt dabei bei etwa dem 1,58-fachen des Anteils mineralischer Bindemittel. Nachteilig an dem Baustoffsystem ist, dass es nicht für tiefe Temperaturen bis -20°C oder gar bis -30°C flexibel und rissüberbrückend ausgebildet ist.

WO 2017/190766 A1, welche dem Oberbegriff des Anspruchs 1 zugrunde liegt, offenbart einen 2K-Reaktiv-Baustoff mit einem Kalziumsulfat, einem Ettringitbilder, einem Aktivator und einem Bindemittel auf Polymerbasis, wobei der Polymeranteil in den darin angegebenen Beispielen bei etwa dem 1,15-fachen des Anteils mineralischer Bindemittel liegt. Im Beispiel V10 besteht das Bindemittelsystem aus Belith CS 10, CEM I 52.5 R und Calciumsulfat-Hemihydrat. Das eingesetzte Polymer Acronal 5011 weist eine Glasübergangstemperatur von -8°C auf.

WO 2016/142339 A1 zeigt Zusammensetzungen für Dichtschlämme, wobei in einem Beispiel auf Seiten 15/16 eine zementäre Pulverkomponente aus 35 Teilen Bindemittel und 460 Teilen Acronal 5442 offenbart wird, woraus sich ein Verhältnis von 6,73 Gew.-% Feststoffgehalt an Polymeren zu Gew.-% mineralische Bindemittel errechnet. Das Acronal 5442 weist eine Glasübergangstemperatur von -15°C auf.

WO 2015/199984 A1 zeigt einen weiteren Reaktiv-Baustoff mit einem Kalziumsulfat, einem Ettringitbilder und einem Bindemittel auf Polymerbasis, wobei der Anteil der eingesetzten Polymere in den darin angegebenen Beispielen bei dem 1,45-fachen des Anteils mineralischer Bindemittel liegt.

### AUFGABE DER ERFINDUNG

Demgegenüber liegt der vorliegenden Erfindung die Aufgabe zugrunde, eine wasserfeste bzw. wasserdichte, flexible, schnell aushärtende und alterungsbeständige Dachabdichtung zu schaffen.

Dabei sollen die oben beschriebenen Nachteile vermindert und gleichzeitig die Vorteile der einzelnen Systeme in Form einer neuartigen Dachabdichtung kombiniert werden.

Die Dachabdichtung soll sich durch leichte Verarbeitbarkeit der einzelnen Komponenten auszeichnen, vor allem aber nicht ausschließlich durch eine einfache Verarbeitung ohne Notwendigkeit von Brennern, zusätzlichen Klebstoffen oder Schweißmitteln, sowie die Aufbringung in möglichst wenigen Arbeitsgängen. Darüber hinaus soll die Dachabdichtung hervorragende Eigenschaften zur Ausbildung von Details und Anschlussstellen aufweisen.

Darüber hinaus sollen die Dachabdichtung und die Verarbeitung ihrer Komponenten eine möglichst geringe gesundheitliche Belastung für den Verarbeiter und die Umwelt darstellen, sowie eine möglichst umweltverträgliche Entsorgung ermöglichen. Des Weiteren soll die Dachabdichtung sich durch eine hohe Feuchtigkeitstoleranz im nicht ausgehärteten Zustand, eine frühe Regenfestigkeit und eine schnelle, im Vergleich zu vorwiegend physikalisch trocknenden System weniger witterungsabhängige Trocknungszeit auszeichnen.

Zusätzlich soll die Dachabdichtung eine individuelle Gestaltbarkeit der Oberfläche durch Pigmentierung der Abdichtung sowie Gestaltung mittels Einstreuung von diversen Füllstoffen ermöglichen.

### OFFENBARUNG DER ERFINDUNG

Die Erfindung wird definiert durch den Gegenstand der unabhängigen Ansprüche 1 und 9.

Nach einem ersten Aspekt der Erfindung wird die Verwendung eines flüssig aufzubringenden Reaktivdachabdichtungsmittels zur Herstellung einer Dachabdichtung vorgeschlagen, wobei das flüssig aufzubringende Reaktivdachabdichtungsmittel eine Flüssigkomponente und eine Pulverkomponente aufweist, wobei die Pulverkomponente ein zur Ausbildung von einer Ettringit-Phase fähiges mineralisches Bindemittelsystem, bestehend aus mehreren mineralischen Bindemitteln, umfasst, und damit die Fähigkeit zur schnellen Bindung von Wasser aufweist, und wobei die Flüssigkomponente eine oder mehrere wässrige Polymerdispersionen umfasst.

Dabei ist vorgesehen, dass das Reaktivdachabdichtungsmittel mindestens 2-mal, bevorzugt mindestens 2,5-mal, insbesondere mindestens 3-mal so viel Gew.-% Feststoffgehalt an Polymeren wie Gew.-% mineralische Bindemittel enthält. Die Angabe Gew.-% nimmt hier Bezug auf das Gewicht des gesamten flüssig aufzubringenden Reaktivdachabdichtungsmittels.

Zusätzlich ist vorgesehen, dass der Anteil an PU-Polymer in der Flüssigkomponente maximal 30%, bevorzugt weniger als 20%, weiter bevorzugt weniger als 15% des Feststoffgehalts an Polymeren beträgt, und zwar bezogen auf die Gesamtmasse der Polymere.

Zusätzlich ist vorgesehen, dass mindestens 80 Gew.-%, bevorzugt mindestens 90 Gew.-%, und insbesondere 100 Gew.-% der eingesetzten Polymere, bezogen auf die Gesamtmasse der Polymere, eine Glasübergangstemperatur Tg von kleiner -20 °C, bevorzugt kleiner -30 °C auf.

Das flüssig aufzubringende Reaktivdachabdichtungsmittel eignet sich als Dachabdichtung zur Abdichtung von Dachflächen, aber auch zur Abdeckung, insbesondere und nicht abschließend, von Detail- und Anschlussbereichen, Balkonen, Terrassen und Laubengängen.

Es hat sich überraschenderweise herausgestellt, dass sich bei diesen Mengenverhältnissen und Eigenschaften der Bindemittel(systeme) hervorragende Eigenschaften zur Dachabdichtung zuverlässig realisieren lassen. Es entsteht eine wasserfeste, flexible, schnell aushärtende, alterungsbeständige und UV-stabile Dachabdichtung.

Vorteilhaft lässt sich durch den Zusatz des mineralischen Bindemittelsystems, welches zur Ausbildung von einer Ettringit-Phase fähig ist, eine signifikante Beschleunigung der Aushärtung des Reaktivdachabdichtungsmittels erreichen, und zwar im Prinzip unabhängig von Witterungsbedingungen. Dies geschieht durch die schnelle Bindung von in der Polymerdispersion enthaltenem Wasser in der Ettringit-Phase.

Bei einem Polymeranteil von weniger als 2-mal so viel Gew.-% Polymere wie Gew.-% mineralische Bindemittel, bezogen auf das Gesamtgewicht des Reaktivdachabdichtungsmittels, bestimmt überwiegend das mineralische Bindemittelsystem die Aushärtereaktion mit dem Effekt, dass eine zu starre, dreidimensionale Zementmatrix mit Polymerpartikeln entsteht und die benötigte Flexibilität und Rissüberbrückungseigenschaften einer Dachabdichtung sich nicht erreichen lassen.

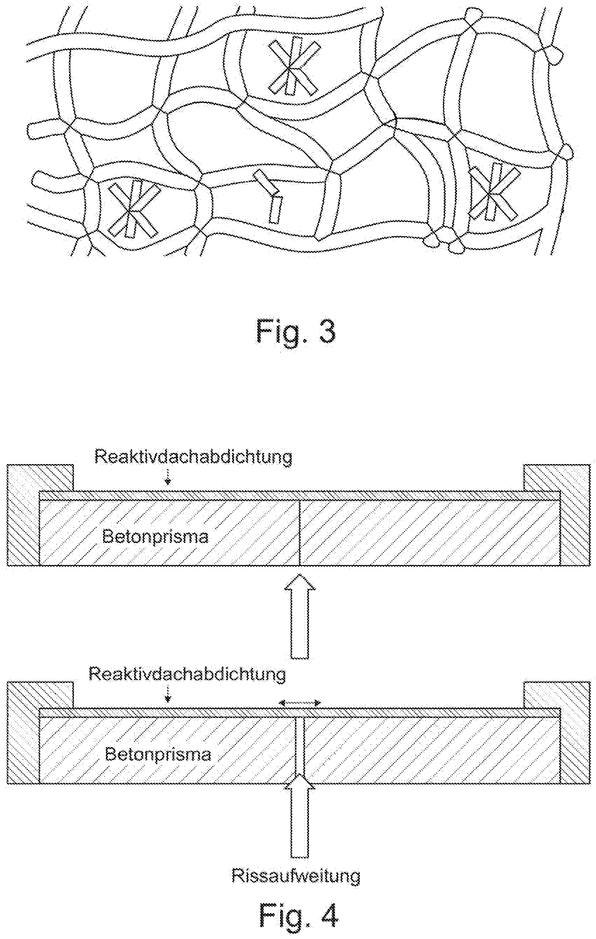

Erfindungsgemäß enthält das flüssig aufzubringende Reaktivdachabdichtungsmittel höchstens 5-mal so viel Gew.-% Polymere wie Gew.-% mineralische Bindemittel. Bei noch mehr Polymeranteil würde das Polymer die Trocknung bestimmen mit dem Effekt, dass eine Polymermatrix mit Zementinseln ohne zusammenhängendes Zementgefüge darin entsteht, vgl. hierzu auch Fig. 3. Generell wurde beobachtet, dass bei höherem Polymeranteil die Aushärtung durch das mineralische Bindemittelsystem und die Ausbildung einer Ettringit-Phase nicht mehr signifikant beschleunigt ist und damit ähnlich wie für ausschließlich physikalisch trocknende einkomponentige Polymerabdichtungssysteme eine hohe Witterungsabhängigkeit der Aushärtung besteht. Eine zu langsame bzw. stärker witterungsabhängige Aushärtung bzw. Trocknung des Produktes, sowie eine witterungsbedingt spät ausgebildete Regenfestigkeit führen dazu, dass das Produkt als erfindungsgemäße Dachabdichtung ungeeignet ist.

Es hat sich gezeigt, dass ein Anteil von bevorzugt mindestens 5% PU-Polymer am Feststoffgehalt an Polymeren einen mit der Einbringung einer Armierung, z.B. eine Armierung mit Polyestervlies (110g/m²), vergleichbaren positiven Effekt auf die Elastizität bei besonders tiefen Temperaturen von -30 °C und kleiner hat. Zusätzlich hat sich gezeigt, dass bei Einbringung von mehr als 30% PU-Polymer am Feststoffgehalt an Polymeren negative Effekte, z.B. eine Koagulation von Polymerpartikeln auftreten, die die Ausbildung einer durchgängigen Abdichtungsschicht beeinträchtigen. In Versuchen wurden lange Trocknungszeiten und eine teilweise bis vollständige Inhibierung der Zementreaktion beobachtet. Oberhalb von 20% und 15% lässt sich ein qualitativ schlechteres Verhalten bei der Aushärtung feststellen. Darüber hinaus hat sich gezeigt, dass bereits die Einbringung von mindestens 1 % PU-Polymer, bezogen auf den Feststoffgehalt an Polymeren, einen deutlichen Einfluss auf die innere Spannung des Polymerfilms hat.

Dabei hat der Einsatz einer in der Erfindung eingesetzten PU-Polymerdispersion im Gegensatz zu einem Polyurethan basierten Verdicker, der zur Steuerung der rheologischen Eigenschaften der Flüssigkomponente und damit des flüssig aufzubringenden Reaktivdachabdichtungsmittels eingesetzt werden kann, keine relevante Erhöhung bzw. Änderung der rheologischen Eigenschaften im Besonderen der Viskosität der erzeugten Flüssigkomponente und damit des flüssig aufzubringenden Reaktivdachabdichtungsmittels zur Folge. Das hier beschriebene PU-Polymer als PU-Polymerdispersion bildet dabei mit einem oder mehreren weiteren eingesetzten Polymeren den beschriebenen Polymerfilm aus.

Das flüssig aufzubringende Reaktivdachabdichtungsmittel liegt erfindungsgemäß als zweikomponentiges (2K) System vor. Die mineralischen Bindemittel liegen dabei in der Pulverkomponente vor. Die eine oder mehreren wässrigen Polymerdispersionen liegen dabei in der Flüssigkomponente vor. Die beiden Komponenten können separat oder in einem beliebigen Gebinde, darin aber getrennt gelagert, insbesondere beispielsweise in Eimern oder Folienbeuteln oder dgl. bereitgestellt sein. Das zweikomponentige Reaktivdachabdichtungsmittel zeichnet sich durch eine besonders leichte Verarbeitbarkeit aus, ohne Einsatz von Brennern, zusätzlichen Klebstoffen oder Schweißmitteln und ermöglicht die Aufbringung in wenigen Arbeitsgängen.

Weiterhin zeichnet sich das zweikomponentige Reaktivdachabdichtungsmittel auch bei kühlen oder feuchten Bedingungen durch eine schnelle Durchtrocknung aus, die auf einer chemischen Reaktion zwischen Bestandteilen der Flüssigkomponente und Bestandteilen der Pulverkomponente und unter anderem auf der Ausbildung von einer Ettringit-Phase beruht, was insbesondere die Gefahr von mechanischen Verletzungen der Beschichtung während der Trocknung verringert.

Ein Vorteil des Einsatzes der Polymerdispersionen besteht darin, dass die organischen Polymerteilchen in einem wässrigen Medium mithilfe von Emulgatoren stabilisiert vorliegen.

Unter einer Polymerdispersion wird eine kolloidal stabile Dispersion von Polymerpartikeln in einer wässrigen Phase verstanden. Der Feststoffgehalt (Gew.-%) der Polymerdispersion beschreibt dabei die Masse des in der wässrigen Phase dispergierten Polymers.

Im Gegensatz zu Polymerdispersionen sind Polymerpulver die (meist sprüh-)getrocknete Form dieser wässrigen Polymerdispersionen. Um ein stabiles Pulver zu erzeugen, werden in aller Regel Trocknungshilfen, z.B. Schutzkolloide, und Antiblockmittel, z.B. gefällte oder pyrogene Kieselsäure, Kaolin (Aluminiumsilikat), Bentonit, Talkum, Tone, Leichtspat, Calciumcarbonat, Magnesiumcarbonat, Bariumsulfat, u.a. verwendet. Antiblockmittel verbessern die Rieselfähigkeit des Pulvers und verhindern das Verblocken des Pulvers während der Lagerung. Als Trocknungshilfen werden Schutzkolloide verwendet, die das Verkleben der Polymerteilchen verhindern und die Partikelgrößen des Pulvers steuern. Der Vorteil von Polymerpulvern ist darin zu sehen, dass das Polymer mit anderen Pulvern wie mineralischen Bindemitteln oder mineralischen Zuschlägen o.ä. vorgemischt wird, um es erst unmittelbar vor der Verwendung mit Wasser wieder zu redispergieren, was zu geringeren Kosten für Transport und Lagerung führt. Darüber hinaus müssen Polymerpulver nicht konserviert werden. Ein großer Nachteil von Polymerpulvern ist aber die im Gegensatz zur wässrigen Polymerdispersion verschlechterte Wasserfestigkeit der Endprodukte, zum Beispiel wegen der nötigen Zugabe von Schutzkolloiden wie etwa Polyvinylalkohol. Des Weiteren ist der Gehalt an reinem Polymer durch die für die Trocknung benötigten Hilfsstoffe reduziert. Daher wird bei Polymerpulvern die Leistungsfähigkeit der Ausgangsdispersion im redispergierten Zustand nicht wieder erreicht.

Die Polymerdispersionen haben bevorzugt eine Mindestfilmbildetemperatur (MFT) von 0°C. Liegt die MFT unterhalb der Raumtemperatur, kann die Dispersion durch Trocknung einen geschlossenen, flexiblen Film ausbilden. Dieser Polymerfilm sorgt in mineralischen zweikomponentigen Systemen für die gewünschte Flexibilität und die Fähigkeit zur Rissüberbrückung. Die MFT wird nach DIN 53787:02-74 als die niedrigste Temperatur bezeichnet, bei der eine dünne Schicht einer Kunststoffdispersion noch zu einem zusammenhängenden Film auftrocknet. Die MFT der Polymerdispersionen wird dabei wie in der genannten Norm beschrieben ermittelt.

Erfindungsgemäß sind folgende Anteile an Polymer in der Flüssigkomponente enthalten:

| | Gew.-% | bevorzugt Gew.-% |
|---|---|---|
| Polymer | 30 - 70 | 50 - 60 |

Hier bezieht sich die Angabe auf den Feststoffgehalt des Polymers in der Polymerdispersion. Der Feststoffgehalt von Polymeren in der Polymerdispersion liegt also zwischen 30% und 70%, bevorzugt zwischen 50% und 60%, bezogen auf das Gewicht der Flüssigkomponente.

Vorteilhaft enthält die Polymerzusammensetzung in der Flüssigkomponente bis zu 30 Gew.-% eines PU-Polymers. Besonders bevorzugt sind PU-Polymer-Anteile von 5 - 10 Gew.-% in der Polymerzusammensetzung der Flüssigkomponente enthalten. Hier bezieht sich die Angabe Gew.-% auf den Anteil an PU-Polymer an der Gesamtmasse Polymer.

Besonders bevorzugt sind folgende Wasseranteile in der Flüssigkomponente enthalten:

| | Gew.-% | bevorzugt Gew.-% |
|---|---|---|
| Wasser | 30 - 80 | 40 - 50 |

Die Angabe Gew.-% bezieht sich hier auf den Anteil an Wasser in der Flüssigkomponente. Dies umfasst jegliches in der Flüssigkomponente enthaltene Wasser.

Besonders bevorzugt sind folgende Anteile als mineralisches Bindemittelsystem in der Pulverkomponente enthalten:

| | Gew.-% | bevorzugt Gew.-% |
|---|---|---|
| Mineralisches Bindemittelsystem | 10 - 30 | 15 - 20 |

Die Angabe Gew.-% bezieht sich hier auf den Anteil der Masse der mineralischen Bindemittel, welche in Kombination das mineralische Bindemittelsystem bilden, gegenüber der Masse der Pulverkomponente.

Besonders bevorzugt sind folgende Füllstoffanteile in der Pulverkomponente enthalten:

| | Gew.-% | bevorzugt Gew.-% |
|---|---|---|
| Füllstoffe | 70 - 90 | 80 - 85 |

Die Angabe Gew.-% bezieht sich hier auf den Anteil der Masse der Füllstoffe, welche in der Pulverkomponente vorliegen, gegenüber der Masse der Pulverkomponente.

Beispielsweise kann die Pulverkomponente folgende Zusammensetzung enthalten:

| | Gew.-% | bevorzugt Gew.-% |
|---|---|---|
| Aluminatzement | 5 - 25 | 10 - 15 |
| Portlandzement | 2 - 12 | 3-6 |
| Calciumsulfatträger | 2 - 8 | 3-6 |
| TiO₂ | 0 - 4 | 0-2 |
| Füllstoff | 55 - 80 | 58 - 70 |

Geeignete mineralische Bindemittelsysteme bestehen insbesondere aus einer Mischung von Zementen und Calciumsulfatträgern, welche sich als Mischung im Besonderen durch die Fähigkeit zur Ausbildung einer Ettringit-Phase auszeichnen. Besonders geeignete mineralische Bindemittel sind Portlandzement, Calciumaluminatzement, im Weiteren als Aluminatzement bezeichnet, sowie Calciumsulfoaluminatzement, Kalke und Gipse.

Geeignete Polymere weisen eine mittels DSC-Verfahren gemessene Glasübergangstemperatur T_{g} von kleiner -20 °C und bevorzugt von kleiner -30 °C auf. Bei Verwendung von Polymeren mit zu hoher T_{g} lässt sich die benötigte Flexibilität bei tiefen Temperaturen (-20 °C und kleiner) nicht erreichen, da sich der Polymerfilm unterhalb der T_{g} der enthaltenden Polymere wie Glas verhält und damit bei Beanspruchung bricht. Die Glasübergangstemperatur T_{g} der Polymerprobe wird dabei bestimmt durch dynamische Differenzkalorimetrie (DSC, DIN EN ISO 11357-2:2014-07 "Kunststoffe - Dynamische Differenz Thermoanalyse (DSC) - Teil 2: Bestimmung der Glasübergangstemperatur und der Glasübergangsstufenhöhe (ISO 11357-2:2013), Deutsche Fassung EN ISO 11357-2:2014"). Dabei wird die Probe in Schritten von 10 °C pro Minute von -90°C bis 20°C erhitzt und die Wärmekapazität festgestellt. Ein Übergangspunkt der Wärmekapazität unterhalb und oberhalb des Glasübergangs wird ermittelt.

Ein Polymer ist eine chemische Verbindung, die aus Ketten- oder verzweigten Molekülen (Makromolekül) besteht, die aus gleichen oder gleichartigen Einheiten, den sogenannten Monomeren, bestehen. Ein Polymer kann ein natürliches oder synthetisches Makromolekül sein, das aus sich wiederholenden Einheiten eines kleineren Moleküls, Monomere besteht.

Bevorzugt basiert zumindest eines der Polymere auf einem oder mehreren Monomeren aus der Gruppe umfassend (Meth-)Acrylate, Acrylnitril, Isocyanat, Polyole, oder einer Kombination davon, zum Beispiel Reinacrylat, Polyurethan oder Styrolacrylat. Es hat sich überraschenderweise herausgestellt, dass sich mit Polymeren, die auf diesen Monomeren basieren, die oben beschriebenen Eigenschaften zur Dachabdichtung zuverlässig realisieren lassen.

Beispiele für (Meth-)Acrylate sind Methacrylsäureester und Acylsäurester von verzweigten und unverzweigten Alkoholen mit 1 bis 15 Kohlenstoffatomen. Geeignete Methacrylsäureester sind beispielsweise Methylmethacrylat, Ethylmethacrylat, n-Propylmethacrylat,i-Propylmethacrylat, n-Butylmethacrylat, i-Butylmethacrylat, t-Butylmethacrylat und Neopentylmethacrylat. Geeignete Acrylsäureester sind beispielsweise Methylacrylat, Ethylacrylat, n-Propylacrylat, i-Propylacrylat, n-Butylacrylat, i-Butylacrylat, t-Butylacrylat und 2-Ethylhexylacrylat.

Alternativ oder zusätzlich hierzu kann vorgesehen sein, dass zumindest eines der Polymere ein konditioniertes Naturlatex ist. Naturkautschuk aus Latex ist ein Polymerisat aus dem Monomer Isopren (2-Methyl-1,3-butadien) und weist eine einheitliche Struktur mit cis-1,4-Verknüpfung auf. Daher kann zumindest eines der Polymere das konditionierte Naturlatex als alleiniges Polymer enthalten. Alternativ kann zumindest eines der Polymere das konditionierte Naturlatex enthalten, das als Vorpolymerisat mit anderen Monomeren und/oder Stoffen weiterhin vernetzt bzw. polymerisiert ist. Die Konditionierung des Naturlatex kann beispielsweise durch Ammoniak oder Kaliumhydroxid erfolgen. Bevorzugt wird ein partiell vorvulkanisierter konditionierter Naturstoff verwendet. Auch mittels konditioniertem Naturlatex lassen sich die oben beschriebenen Eigenschaften zur Dachabdichtung zuverlässig realisieren.

Im Falle von konditioniertem Naturlatex enthält der flüssig aufzubringende Reaktivbaustoff mindestens 2-mal, weiter bevorzugt mindestens 2,5-mal so viel Gew.-% konditioniertes Naturlatex wie Gew.-% mineralische Bindemittel. Es hat sich überraschenderweise herausgestellt, dass sich bei diesen Mengenverhältnissen die oben beschriebenen Eigenschaften zur Dachabdichtung zuverlässig realisieren lassen.

Enthält der flüssig aufzubringende Reaktivbaustoff mindestens 2-mal so viel Gew.-% konditioniertes Naturlatex wie Gew.-% mineralische Bindemittel, dann ist es bis -20°C ausreichend flexibel und rissüberbrückend ausgebildet. Enthält der flüssig aufzubringende Reaktivbaustoff mindestens 2,5-mal so viel Gew.-% konditioniertes Naturlatex wie Gew.-% mineralische Bindemittel, dann ist es bis -30°C ausreichend flexibel und rissüberbrückend ausgebildet.

Der flüssig aufzubringende Reaktivbaustoff enthält höchstens 5-mal so viel Gew.-% konditioniertes Naturlatex wie Gew.-% mineralische Bindemittel.

Bevorzugt ist, dass das zumindest ein Polymer ein Homopolymerisat wie Polystyrol, Poly(meth)acrylat bzw. (Meth)Acrylatpolymer aus einer Monomereinheit, Polybutadien oder Polyacrylnitril ist. Alternativ bevorzugt ist, dass das zumindest eine Polymer ein Copolymerisat wie Acrylnitril-Butadien-Copolymer, Acrylnitril-Copolymer, Butadien-Copolymer, Acrylnitril-Acrylat-Copolymer, Acrylnitril-Methacrylat-Copolymer, Acrylnitril-Butadien-Acrylat-Copolymer, Acrylat-Butadien-Copolymer, Acrylnitril-Butadien-Methacrylat-Copolymer, Methacrylat-Butadien-Copolymer, Acrylnitril-Butadien-Styrol-Copolymer, Styrol-Acrylnitril-Copolymer, Styrol-Butadien-Copolymer, Acrylnitril-StyrolAcrylat-Copolymer, Acrylat-Styrol-Copolymer, Acrylnitril-Styrol-Methacrylat-Copolymer, Methacrylat-Styrol-Copolymer, Acrylnitril-Styrol-Butadien-Acrylat-Copolymer, Acrylat-Styrol-Butadien-Copolymer, Acrylnitril-Styrol-Butadien-Methacrylat-Copolymer, Methacrylat-Styrol-Butadien-Copolymer, alternativ besonders bevorzugt Acrylat-Copolymer, Methacrylat-Copolymer oder Polyurethan ist. Auch kann das Copolymerisat ein (Meth)Acrylatcopolymer sein, das mehr als eine Monomereinheit enthält.

In einer Ausführungsform enthält die wässrige Polymerdispersion zwei oder mehr Polymere. Bevorzugt sind hier Acrylatpolymer und Polyurethan oder Acrylatpolymer und konditioniertes Naturlatex.

In einer Ausführungsform enthält die wässrige Polymerdispersion zumindest ein Copolymer. Bevorzugt ist dies ein Acrylatcopolymer.

In einer Ausführungsform enthält der flüssig aufzubringende Reaktivbaustoff einen calcitischen Füllstoff und die wässrige Polymerdispersion ein konditioniertes Naturlatex. Die chemische Wechselwirkung zwischen dem konditionierten Naturlatex und den Ca²⁺-Ionen erweist sich hier als vorteilhaft.

In einer vorteilhaften Ausführungsform enthält der flüssig aufzubringende Reaktivbaustoff ein oder mehrere UV-stabilisierende und IR-reflektierende Pigmente.

Weitere Pigmente, insbesondere Farbpigmente, können enthalten sein, um eine individuelle Gestaltbarkeit der Dachoberfläche durch Pigmentierung der Dachabdichtung zu ermöglichen.

Weiterhin enthält das flüssig aufzubringende Reaktivdachabdichtungsmittel bevorzugt ein oder mehrere Füllstoffe, insbesondere Gemische von einem oder mehreren silikatischen und/oder calcitischen Füllstoffen, sowie einem oder mehreren Leichtfüllstoffen auf silikatischer Basis. Als Leichtfüllstoff werden im Rahmen der vorliegenden Offenbarung Füllstoffe bezeichnet, die ein Schüttgewicht von kleiner als 500 g/l aufweisen. Beispiele für Leichtfüllstoffe umfassen Mikrohohlkugeln aus Glas, oder Siliciumoxid. Beispiele für silikatische Füllstoffe sind Quarzsand und Quarzmehl, während Beispiele für calcitische Füllstoffe Kalksteinmehl, Calciumcarbonat, Dolomit und Kreide, bevorzugt Kalksteinmehl, sind.

Alternativ oder zusätzlich können die Füllstoffe Recyclingstoffe enthalten. Beispiele für Recyclingstoffe sind Gummigranulat oder Kunststoffgranulat. Beispielsweise wird Gummigranulat verwendet, das aus Altgummi wie Material von Gummidichtungen, Gummischläuchen, Gummiauskleidungen, Hartgummi, Weichgummi, Altreifen, Gummigriffen oder dergleichen erzeugt ist. Das Gummigranulat basiert bevorzugt auf vulkanisiertem natürlichem Gummi und/oder vulkanisiertem Synthesekautschuk, bevorzugter auf ungesättigtem Kautschuk mit Styrol- und Butadieneinheiten.

Weiterhin enthält der flüssig aufzubringende Reaktivbaustoff bevorzugt ein oder mehrere Additive, insbesondere Additive aus der Gruppe umfassend Verdicker wie Polyurethan-Verdicker, Acrylat-Verdicker, Entschäumer, Netzmittel, Beschleuniger, Verzögerer, Dispergiermittel, Vernetzer, Konservierer und Brandverzögerer.

Beispiele für Verdicker sind Polysaccharide wie Celluloseether, modifizierte Cellulose, modifizierte Celluloseether, Stärkeether, Guar Gum, Xanthan Gum, Polycarbonsäuren wie Polyacrylsäure und deren Teilester, Polyvinylalkohole, hydrophob modifizierte Polyvinylalkohole, acetalisierte Polyvinylalkohole, Bentonit, Casein, assoziativ wirkende Verdicker, Polyurethan-Verdicker und Acrylat-Verdicker. Andere Beispiele für Verdicker sind Schichtsilikate. Beispiele für Schichtsilikate sind Glimmer, Talk, Serpentin und Tonminerale wie Vermiculit, insbesondere Muskovit, Bentonit und Kaolinit.

Entschäumer können auf Silikonbasis, beispielsweise auf Silikonöl-Basis, aber auch auf Pflanzenöl-Basis und Mineralöl-Basis sein.

Netzmittel oder Dispergiermittel können anionische, kationische und/oder nichtionische Detergenzien sein.

Beispiele für Beschleuniger sind Alkali- oder Erdalkalisalze von anorganischen Säuren wie alkalische Carbonate wie beispielsweise Natriumcarbonat, Lithiumcarbonat oder Aluminate wie Tricalciumaluminat.

Verzögerer können eine Kombination mehrerer anorganischer und/oder organischer Stoffe wie beispielsweise Phosphate, Ligninsulfonate, Zucker(derivate) wie Saccharose, Sucrose, Glucose, Fructose, Saccharide, Sorbit, Pentaerythrit, Hydroxycarbonsäuren wie Zitronensäure, Weinsäure, Gluconsäure oder Dicarbonsäuren wie Oxalsäure, Bernsteinsäure oder deren Salze sein.

Beispiele für Vernetzer sind Metalloxide und Metallsalze, Halbmetalloxide, Borsäure bzw. deren Salze, oder Dialdehyde wie Glutardialdehyd, aber auch Metalle wie zum Beispiel Zirkonium.

Beispiele für Brandverzögerer sind Blähgraphite oder Aluminiumhydroxid.

Als weitere Füllstoffe können Fasern verwendet werden, sowohl organische als auch anorganische Fasern wie beispielsweise Basalt, Glasfasern, Polypropylenfasern, Carbonfasern und Polyesterfasern.

Beispielsweise kann die Flüssigkomponente folgende Additive enthalten:

| | Gew.-% | bevorzugt Gew.-% |
|---|---|---|
| Verdicker | 0 - 1 | 0,14 - 0,4 |
| Entschäumer | 0 - 1 | 0,2 - 0,7 |

Nach einem weiteren Aspekt der Erfindung wird eine Dachabdichtung hergestellt durch Mischen einer Flüssigkomponente und einer Pulverkomponente, wobei die Pulverkomponente ein zur Ausbildung von Ettringit fähiges mineralisches Bindemittelsystem und damit die Fähigkeit zur schnellen Abbindung von Wasser, bestehend aus mehreren mineralische Bindemitteln, umfasst, und die Flüssigkomponente eine oder mehrere wässrige Polymerdispersionen umfasst, von denen eine wässrige Polyurethan Polymerdispersion im Folgenden immer als PU-Dispersion bezeichnet sein kann.

Dabei ist vorgesehen, dass die Dachabdichtung mindestens 2-mal, bevorzugt mindestens 2,5-mal, insbesondere mindestens 3-mal so viel Gew.-% Feststoffgehalt an Polymeren wie Gew.-% mineralische Bindemittel und höchstens 5-mal so viel Gew.-% Feststoffgehalt an Polymeren wie Gew.-% mineralische Bindemittel, bezogen auf das Gesamtgewicht des Reaktivdachabdichtungsmittels, enthält und der Anteil der PU-Dispersion höchstens 30% des Feststoffgehalts an Polymeren, beträgt. Mindestens 80 Gew.-% der in dem Reaktivdachabdichtungsmittel eingesetzten Polymere weist eine Glasübergangstemperatur T_{g} von kleiner -20 °C, bevorzugt kleiner -30 °C auf.

Vorteilhaft ist die Dachabdichtung in einem ausgehärteten Zustand bei Temperaturen bis mindestens TL3, bevorzugt TL4, nach ETAG 005, Teil 1, in der Überarbeitung vom März 2004, flexibel mit einer Einstufung W3 nach der Durchführung eines im EOTA TR-008 angegebenen Verfahrens und rissüberbrückend für Risse bis mindestens 1,5 mm nach der Durchführung eines im EOTA TR-013 angegebenen Verfahrens ausgebildet.

Die Dachabdichtung ist also vorteilhaft bis mindestens -20°C, bevorzugt bis -30°C flexibel und rissüberbrückend ausgebildet. Die Temperaturen, die Leistungsklassen, sowie die Referenzen auf die EOTA Technical Reports sind in der ETAG 005, Teil 1 definiert.

Enthält die Dachabdichtung mindestens 2-mal so viel Gew.-% Polymere wie Gew.-% mineralische Bindemittel, bezogen auf das Gesamtgewicht des Reaktivdachabdichtungsmittels, dann ist sie im ausgehärteten Zustand bis -20°C ausreichend flexibel und rissüberbrückend ausgebildet. Enthält die Dachabdichtung mindestens 2,5-mal so viel Gew.-% Polymere wie Gew.-% mineralische Bindemittel, bezogen auf das Gesamtgewicht des Reaktivdachabdichtungsmittels, dann ist sie bis -25°C ausreichend flexibel und bis -20°C ausreichend rissüberbrückend ausgebildet. Enthält die Dachabdichtung mindestens 3-mal so viel Gew.-% Polymere wie Gew.-% mineralische Bindemittel, bezogen auf das Gesamtgewicht des Reaktivdachabdichtungsmittels, dann ist sie bis - 30°C ausreichend flexibel und rissüberbrückend ausgebildet.

Die Dachabdichtung ist hinsichtlich ihrer rissüberbrückenden Eigenschaften allen bisher bekannten, vergleichbaren Dachabdichtungen überlegen und zeichnet sich durch eine herausragende Haftung auf diversen Untergründen, wie z.B. mineralischen, metallischen, hölzernen und kunststoffbasierten Substraten aus und bietet eine dauerhaft beständige Dachabdichtung bzw. Versiegelung von Substraten auch bei niedrigen Temperaturen im Winter.

Vorteilhaft ist die Dachabdichtung in einem ausgehärteten Zustand bevorzugt bei Temperaturen bis mindestens TL3, bevorzugt TL4, nach ETAG 005, Teil 1, in der Überarbeitung vom März 2004, stoßbeständig mit einer Einstufung P4 nach der Durchführung eines im EOTA TR-006 angegebenen Verfahrens (dynamischer Eindruck) ausgebildet.

Die Dachabdichtung ist also vorteilhaft bis mindestens -20°C, bevorzugt bis -30°C stoßbeständig ausgebildet und eignet sich damit hervorragend als dauerhaft beständige Dachabdichtung bzw. Versiegelung von Substraten auch bei niedrigen Temperaturen im Winter.

Insbesondere ist Dachabdichtung in einem ausgehärteten Zustand bevorzugt bei Temperaturen bis mindestens TH4 nach ETAG 005, Teil 1, in der Überarbeitung vom März 2004, stoßbeständig mit einer Einstufung P4 nach der Durchführung eines im EOTA TR-007 angegebenen Verfahrens (statischer Eindruck) ausgebildet. Das flüssig aufzubringende Reaktivdachabdichtungsmittel ist also bevorzugt außerdem bis mindestens 90°C statisch penetrationsbeständig ausgebildet. Vorteilhaft bewirkt die Dachabdichtung damit eine dauerhaft beständige Abdichtung bzw. Versiegelung von Substraten auch bei hohen Temperaturen im Sommer und unter direkter Sonneneinstrahlung.

Insbesondere ist die Dachabdichtung in einem ausgehärteten Zustand bevorzugt bei Temperaturen bis mindestens TL3, bevorzugt TL4, nach ETAG 005, Teil 1, flexibel nach einer Prüfung in Anlehnung an die Prüfung des Kaltbiegeverhaltens nach DIN 52123:2014-06 ausgebildet, wobei bei der Prüfung in Anlehnung des Kaltbiegeverhaltens nach DIN 52123:2014-06 Proben der Dachabdichtung mit Schichtdicken zwischen 1,9 mm bis 2,3 mm im ausgehärteten Zustand nach 24 Stunden Lagerung über einen Zylinder mit einem Durchmesser von 4 cm gebogen und optisch auf Ausbildung von Rissen > 0,1 mm untersucht werden.

Weiter bevorzugt ist die Dachabdichtung im ausgehärteten Zustand bei Temperaturen bis mindestens -10°C nach ETAG 005, Teil 1 und Teil 8, Überarbeitung März 2004, UV-beständig nach Kategorie "M" oder "S" mit einer Einstufung W3 nach der Durchführung eines im EOTA TR-010 angegebenen Verfahrens ausgebildet.

Insbesondere ist die Dachabdichtung in einem ausgehärteten Zustand, so ausgebildet, dass sie bei einer Prüfung der Zugeigenschaften gemäß DIN EN ISO 527-1:2019-12 "Kunststoffe - Bestimmung der Zugeigenschaften" eine Zugspannung von größer 0,5 N/mm², bevorzugt größer 1 N/mm², besonders bevorzugt größer 1,5 N/mm² sowie eine Zugdehnung bei Maximalspannung von größer 20%, bevorzugt größer 30 %, besonders bevorzugt größer 40% aufweist. Dabei lässt sich durch den Einsatz von mehr als 1 Gew.-% PU-Polymer, bezogen auf die Gesamtmasse der Polymere, eine Steigerung der gemessenen Zugspannung auf größer 1,5 N/mm² realisieren.

Ein Verfahren zur Herstellung einer Dachabdichtung umfasst folgende Schritte:
- Mischen des oben beschriebenen flüssig aufzubringenden Reaktivbaustoffs und
- Applizieren des Baustoffs auf einer Oberfläche des Bauwerks, wie etwa auf einem Flachdach, einem Balkon, einem Detail- und Anschlussbereich, einer Terrasse oder einem Laubengang.

In bevorzugten Ausführungsformen wird die Dachabdichtung mit einer Schichtdicke von 1 bis 5 mm, bevorzugt von 2 bis 3 mm auf der Oberfläche des Dachs appliziert.

In einer Ausführungsformen wird das flüssig aufzubringende Reaktivdachabdichtungsmittel mit einem verstärkenden Vlies, einem Gewebe, einer Gewebematte oder mit zumindest einem Armierungsmaterial, insbesondere Fasern, appliziert. Das Vlies weist als Material Fasern wie Glasfasern und/oder Basaltfasern und/oder organische Fasern wie Polypropylenfasern, Polyethylenfasern oder Polyesterfasern auf. Beispielsweise ist das Vlies als Polyesterfaservliesstoff oder Edelstahlfaservliesstoff ausgebildet, bevorzugt als Polyesterfaservliesstoff. Das Armierungsmaterial umfasst bevorzugt Glasfasern und/oder Kunststofffasern wie Polyvinylalkohol-Fasern, Polyester-Fasern, Polypropylen-Fasern, Polyamid-Fasern, Polyethylen-Fasern und/oder Aramid-Fasern.

### FIGUREN

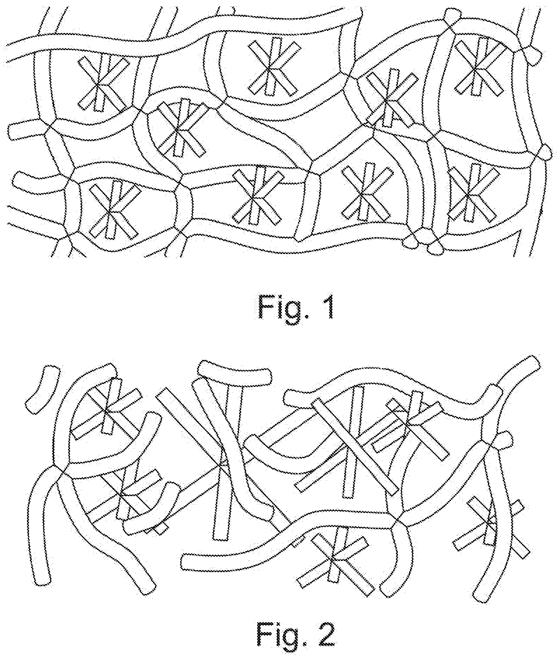

Figur 1 - 3 zeigen schematische Darstellungen zur Erläuterung des Reaktionsmechanismus der Reaktivdachabdichtung. In Figuren 1 - 3 sind schematisch Reaktionsprodukte dargestellt, die bei einer Mischung von zweikomponentigen Reaktivdachabdichtungsmitteln mit unterschiedlicher Zusammensetzung von Polymeren und mineralischen Bindemitteln entstehen.

Figur 1 zeigt das Ergebnis einer optimalen, erfindungsgemäßen Reaktion. Die Zementreaktion, dargestellt in Form von sternförmigen Strukturen, zum Beispiel Ettringitnadeln, ist vom Polymerfilm durchsetzt, dargestellt in Form von unregelmäßigen Linien. Bei dieser Reaktion erfolgte die Verfilmung des Polymers gleichzeitig mit der Ausbildung der mineralischen Bindemittelmatrix. Es entsteht eine wasserfeste, flexible, schnell aushärtende, alterungsbeständige und UV-stabile Dachabdichtung.

In Figur 2 ist ein Ergebnis einer nicht erfindungsgemäßen Reaktion dargestellt. Hier hat das mineralische Bindemittelsystem die Reaktion bestimmt. Zunächst ist in diesem Beispiel die Bildung der Zementhydratphasen ohne Einbau der Polymermatrix erfolgt. Eine zu späte Ausbildung des Polymerfilms führt zur Entstehung einer starren dreidimensionalen zementären Bindemittelmatrix mit global verfilmten Polymerpartikeln darin, aus der keine flexible Reaktivdachabdichtung entstehen kann.

In Figur 3 ist ein weiteres Ergebnis einer nicht erfindungsgemäßen Reaktion dargestellt. Hier hat der Polymeranteil die Reaktion bestimmt. Hierbei fand primär physikalische Trocknung statt. Bei einer zu frühen Verfilmung des Polymers entsteht eine Polymermatrix mit wenigen Ettringitnadeln bzw. Zementinseln darin. Das Ergebnis ist ein flexibles Produkt mit geringer Zugspannung, geringer Wasserfestigkeit und langsamer Aushärtung, das je nach Ausbildungsgrad der zementären Bindemittelmatrix als Dachabdichtung z.B. aufgrund zu hoher Wasseraufnahme des Abdichtungsfilms ungeeignet ist.

### BEISPIELE

| | | P1 | P2 | P3 | P4 | P5 | P6 |
|---|---|---|---|---|---|---|---|
| Pulverkomp. [%] | | | | | | | |
| Aluminatzement | mineralisches Bindemittelsystem | 11,38 | 13,62 | 17,04 | 22,8 | 27,36 | 34,2 |
| Portlandzement | | 2,84 | 3,41 | 4,26 | 5,7 | 6,84 | 8,55 |
| Calciumsulfathalbhydrat | | 3,79 | 4,54 | 5,68 | 7,6 | 9,12 | 11,4 |
| Füllstoff | Füllstoffe | 64,99 | 61,43 | 56,02 | 46,9 | 39,68 | 28,85 |
| Leichtfüllstoff | | 16 | 16 | 16 | 16 | 16 | 16 |
| Additive | Additive | 1 | 1 | 1 | 1 | 1 | 1 |
| Summe | | 100,00 | 100,00 | 100,00 | 100,00 | 100,00 | 100,00 |
| Flüssigkomp. [%] | | | | | | | |
| Acrylatpolymer | Polymerdispersion(en) | 54 | 54 | 54 | 54 | 54 | 54 |
| PU-Polymer | | 0 | 0 | 0 | 0 | 0 | 0 |
| Wasser | | 45,5 | 45,5 | 45,5 | 45,5 | 45,5 | 45,5 |
| Entschäumer | Additive | 0,2 | 0,2 | 0,2 | 0,2 | 0,2 | 0,2 |
| Verdicker | | 0,3 | 0,3 | 0,3 | 0,3 | 0,3 | 0,3 |
| Summe | | 100,00 | 100,00 | 100,00 | 100,00 | 100,00 | 100,00 |
| Mischungsverhältnis PK : FK | | 1 | 1 | 1 | 1 | 1 | 1 |
| Polymere [Gew.-%] | Jeweils bezogen auf die gesamte Masse des flüssig aufzubringenden Reaktivdachabdichtungsmittels | 27 | 27 | 27 | 27 | 27 | 27 |
| mineralische Bindemittel [Gew.-%] | | 9,01 | 10,79 | 13,49 | 18,05 | 21,66 | 27,08 |
| Verhältnis Gew.-% Polymere zu Gew.-% mineralische Bindemittel | | 3,00 | 2,50 | 2,00 | 1,50 | 1,25 | 1,00 |
| Armierungsvlies | | Nein | Nein | Nein | Nein | Nein | Nein |
| Anteil PU-Polymer an Gesamtmasse Polymere | | 0,0% | 0,0% | 0,0% | 0,0% | 0,0% | 0,0% |
| Höchste gemessene Tg nach DSC der eingesetzten Polymere [°C] | | -35 | -35 | -35 | -35 | -35 | -35 |
| Tieftemperaturelastizität minimale Temp. [°C] | | -30 | -25 | -25 | -25 | -20 | -20 |
| Rissüberbrückung (1,5 mm) minimale Temp. [°C] | | -35 | -30 | -25 | -20 | -5 | -5 |

| | | P7 | P 8 | P9 | P10 | P 11 | P12 |
|---|---|---|---|---|---|---|---|
| Pulverkomp. [%] | | | | | | | |
| Aluminatzement | mineralisches Bindemittelsystem | 11,38 | 13,62 | 17,04 | 22,8 | 27,36 | 34,2 |
| Portlandzement | | 2,84 | 3,41 | 4,26 | 5,7 | 6,84 | 8,55 |
| Calciumsulfathalbhydrat | | 3,79 | 4,54 | 5,68 | 7,6 | 9,12 | 11,4 |
| Füllstoff | Füllstoffe | 64,99 | 61,43 | 56,02 | 46,9 | 39,68 | 28,85 |
| Leichtfüllstoff | | 16 | 16 | 16 | 16 | 16 | 16 |
| Additive | Additive | 1 | 1 | 1 | 1 | 1 | 1 |
| Summe | | 100,00 | 100,00 | 100,00 | 100,00 | 100,00 | 100,00 |
| Flüssigkomp. [%] | | | | | | | |
| Acrylatpolymer | Polymerdispersion(en) | 54 | 54 | 54 | 54 | 54 | 54 |
| PU-Polymer | | 0 | 0 | 0 | 0 | 0 | 0 |
| Wasser | | 45,5 | 45,5 | 45,5 | 45,5 | 45,5 | 45,5 |
| Entschäumer | Additive | 0,2 | 0,2 | 0,2 | 0,2 | 0,2 | 0,2 |
| Verdicker | | 0,3 | 0,3 | 0,3 | 0,3 | 0,3 | 0,3 |
| Summe | | 100,00 | 100,00 | 100,00 | 100,00 | 100,00 | 100,00 |
| Mischungsverhältnis PK : FK | | 1 | 1 | 1 | 1 | 1 | 1 |
| Polymere [Gew.-%] | Jeweils bezogen auf die gesamte Masse des flüssig aufzubringenden Reaktivdachabdichtungsmittels | 27 | 27 | 27 | 27 | 27 | 27 |
| mineralische Bindemittel [Gew.-%] | | 9,01 | 10,79 | 13,49 | 18,05 | 21,66 | 27,08 |
| Verhältnis Gew.-% Polymere zu Gew.-% mineralische Bindemittel | | 3,00 | 2,50 | 2,00 | 1,50 | 1,25 | 1,00 |
| Armierungsvlies | | Ja | Ja | Ja | Ja | Ja | Ja |
| Anteil PU-Polymer an Gesamtmasse Polymere | | 0,0% | 0,0% | 0,0% | 0,0% | 0,0% | 0,0% |
| Höchste gemessene Tg nach DSC der eingesetzten Polymere [°C] | | -35 | -35 | -35 | -35 | -35 | -35 |
| Tieftemperaturelastizität minimale Temp. [°C] | | -35 | -30 | -30 | -25 | -25 | -25 |
| Rissüberbrückung (1,5 mm) minimale Temp. [°C] | | n.b. | n.b. | n.b. | n.b. | n.b. | n.b. |

| | | P 13 | P 14 | P 15 | P 16 | P 17 | P 18 |
|---|---|---|---|---|---|---|---|
| Pulverkomp. [%] | | | | | | | |
| Aluminatzement | mineralisches Bindemittelsystem | 11,38 | 13,62 | 17,04 | 22,8 | 27,36 | 34,2 |
| Portlandzement | | 2,84 | 3,41 | 4,26 | 5,7 | 6,84 | 8,55 |
| Calciumsulfathalbhydrat | | 3,79 | 4,54 | 5,68 | 7,6 | 9,12 | 11,4 |
| Füllstoff | Füllstoffe | 64,99 | 61,43 | 56,02 | 46,9 | 39,68 | 28,85 |
| Leichtfüllstoff | | 16 | 16 | 16 | 16 | 16 | 16 |
| Additive | Additive | 1 | 1 | 1 | 1 | 1 | 1 |
| Summe | | 100,00 | 100,00 | 100,00 | 100,00 | 100,00 | 100,00 |
| Flüssigkomp. [%] | | | | | | | |
| Acrylatpolymer | Polymerdispersion(en) | 53,46 | 53,46 | 53,46 | 53,46 | 53,46 | 53,46 |
| PU-Polymer | | 0,54 | 0,54 | 0,54 | 0,54 | 0,54 | 0,54 |
| Wasser | | 45,5 | 45,5 | 45,5 | 45,5 | 45,5 | 45,5 |
| Entschäumer | Additive | 0,2 | 0,2 | 0,2 | 0,2 | 0,2 | 0,2 |
| Verdicker | | 0,3 | 0,3 | 0,3 | 0,3 | 0,3 | 0,3 |
| Summe | | 100,00 | 100,00 | 100,00 | 100,00 | 100,00 | 100,00 |
| Mischungsverhältnis PK : FK | | 1 | 1 | 1 | 1 | 1 | 1 |
| Polymere [Gew.-%] | Jeweils bezogen auf die gesamte Masse des flüssig aufzubringenden Reaktivdachabdichtungsmittels | 27 | 27 | 27 | 27 | 27 | 27 |
| mineralische Bindemittel [Gew.-%] | | 9,01 | 10,79 | 13,49 | 18,05 | 21,66 | 27,08 |
| Verhältnis Gew.-% Polymere zu Gew.-% mineralische Bindemittel | | 3,00 | 2,50 | 2,00 | 1,50 | 1,25 | 1,00 |
| Armierungsvlies | | Nein | Nein | Nein | Nein | Nein | Nein |
| Anteil PU-Polymer an Gesamtmasse Polymere | | 1% | 1% | 1% | 1% | 1% | 1% |
| Höchste gemessene Tg nach DSC der eingesetzten Polymere [°C] | | -35 | -35 | -35 | -35 | -35 | -35 |
| Tieftemperaturelastizität minimale Temp. [°C] | | -30 | -25 | -25 | -25 | -20 | -20 |
| Rissüberbrückung (1,5 mm) minimale Temp. [°C] | | -35 | -30 | -20 | -20 | -5 | -5 |

| | | P 19 | P 20 | P 21 | P 22 | P 23 | P 24 |
|---|---|---|---|---|---|---|---|
| Pulverkomp. [%] | | | | | | | |
| Aluminatzement | mineralisches Bindemittelsystem | 11,38 | 13,62 | 17,04 | 22,8 | 27,36 | 34,2 |
| Portlandzement | | 2,84 | 3,41 | 4,26 | 5,7 | 6,84 | 8,55 |
| Calciumsulfathalbhydrat | | 3,79 | 4,54 | 5,68 | 7,6 | 9,12 | 11,4 |
| Füllstoff | Füllstoffe | 64,99 | 61,43 | 56,02 | 46,9 | 39,68 | 28,85 |
| Leichtfüllstoff | | 16 | 16 | 16 | 16 | 16 | 16 |
| Additive | Additive | 1 | 1 | 1 | 1 | 1 | 1 |
| Summe | | 100,00 | 100,00 | 100,00 | 100,00 | 100,00 | 100,00 |
| Flüssigkomp. [%] | | | | | | | |
| Acrylatpolymer | Polymerdispersion(en) | 52,92 | 52,92 | 52,92 | 52,92 | 52,92 | 52,92 |
| PU-Polymer | | 1,08 | 1,08 | 1,08 | 1,08 | 1,08 | 1,08 |
| Wasser | | 45,5 | 45,5 | 45,5 | 45,5 | 45,5 | 45,5 |
| Entschäumer | Additive | 0,2 | 0,2 | 0,2 | 0,2 | 0,2 | 0,2 |
| Verdicker | | 0,3 | 0,3 | 0,3 | 0,3 | 0,3 | 0,3 |
| Summe | | 100,00 | 100,00 | 100,00 | 100,00 | 100,00 | 100,00 |
| Mischungsverhältnis PK : FK | | 1 | 1 | 1 | 1 | 1 | 1 |
| Polymere [Gew.-%] | Jeweils bezogen auf die gesamte Masse des flüssig aufzubringenden Reaktivdachabdichtungsmittels | 27 | 27 | 27 | 27 | 27 | 27 |
| mineralische Bindemittel [Gew.-%] | | 9,01 | 10,79 | 13,49 | 18,05 | 21,66 | 27,08 |
| Verhältnis Gew.-% Polymere zu Gew.-% mineralische Bindemittel | | 3,00 | 2,50 | 2,00 | 1,50 | 1,25 | 1,00 |
| Armierungsvlies | | Nein | Nein | Nein | Nein | Nein | Nein |
| Anteil PU-Polymer an Gesamtmasse Polymere | | 2% | 2% | 2% | 2% | 2% | 2% |
| Höchste gemessene Tg nach DSC der eingesetzten Polymere [°C] | | -35 | -35 | -35 | -35 | -35 | -35 |
| Tieftemperaturelastizität minimale Temp. [°C] | | -30 | -25 | -25 | -25 | -20 | -20 |
| Rissüberbrückung (1,5 mm) minimale Temp. [°C] | | -35 | -30 | -25 | -20 | -5 | -5 |

| | | P 25 | P 26 | P 27 | P 28 | P 29 | P 30 |
|---|---|---|---|---|---|---|---|
| Pulverkomp. [%] | | | | | | | |
| Aluminatzement | mineralisches Bindemittelsystem | 11,38 | 13,62 | 17,04 | 22,8 | 27,36 | 34,2 |
| Portlandzement | | 2,84 | 3,41 | 4,26 | 5,7 | 6,84 | 8,55 |
| Calciumsulfathalbhydrat | | 3,79 | 4,54 | 5,68 | 7,6 | 9,12 | 11,4 |
| Füllstoff | Füllstoffe | 64,99 | 61,43 | 56,02 | 46,9 | 39,68 | 28,85 |
| Leichtfüllstoff | | 16 | 16 | 16 | 16 | 16 | 16 |
| Additive | Additive | 1 | 1 | 1 | 1 | 1 | 1 |
| Summe | | 100,00 | 100,00 | 100,00 | 100,00 | 100,00 | 100,00 |
| Flüssigkomp. [%] | | | | | | | |
| Acrylatpolymer | Polymerdispersion(en) | 51,3 | 51,3 | 51,3 | 51,3 | 51,3 | 51,3 |
| PU-Polymer | | 2,7 | 2,7 | 2,7 | 2,7 | 2,7 | 2,7 |
| Wasser | | 45,5 | 45,5 | 45,5 | 45,5 | 45,5 | 45,5 |
| Entschäumer | Additive | 0,2 | 0,2 | 0,2 | 0,2 | 0,2 | 0,2 |
| Verdicker | | 0,3 | 0,3 | 0,3 | 0,3 | 0,3 | 0,3 |
| Summe | | 100,00 | 100,00 | 100,00 | 100,00 | 100,00 | 100,00 |
| Mischungsverhältnis PK : FK | | 1 | 1 | 1 | 1 | 1 | 1 |
| Polymere [Gew.-%] | Jeweils bezogen auf die gesamte Masse des flüssig aufzubringenden Reaktivdachabdichtungsmittels | 27 | 27 | 27 | 27 | 27 | 27 |
| mineralische Bindemittel [Gew.-%] | | 9,01 | 10,79 | 13,49 | 18,05 | 21,66 | 27,08 |
| Verhältnis Gew.-% Polymere zu Gew.-% mineralische Bindemittel | | 3,00 | 2,50 | 2,00 | 1,50 | 1,25 | 1,00 |
| Armierungsvlies | | Nein | Nein | Nein | Nein | Nein | Nein |
| Anteil PU-Polymer an Gesamtmasse Polymere | | 5% | 5% | 5% | 5% | 5% | 5% |
| Höchste gemessene Tg nach DSC der eingesetzten Polymere [°C] | | -35 | -35 | -35 | -35 | -35 | -35 |
| Tieftemperaturelastizität minimale Temp. [°C] | | -35 | -30 | -25 | -25 | -20 | -20 |
| Rissüberbrückung (1,5 mm) minimale Temp. [°C] | | -35 | -35 | -30 | -20 | -5 | -5 |

| | | P31 | P32 | P33 | P34 | P35 | |
|---|---|---|---|---|---|---|---|
| Pulverkomp. [%] | | | | | | | |
| Aluminatzement | mineralisches Bindemittelsystem | 11,38 | 13,62 | 17,04 | 22,8 | 27,36 | |
| Portlandzement | | 2,84 | 3,41 | 4,26 | 5,7 | 6,84 | |
| Calciumsulfathalbhydrat | | 3,79 | 4,54 | 5,68 | 7,6 | 9,12 | |
| Füllstoff | Füllstoffe | 64,99 | 61,43 | 56,02 | 46,9 | 39,68 | |
| Leichtfüllstoff | | 16 | 16 | 16 | 16 | 16 | |
| Additive | Additive | 1 | 1 | 1 | 1 | 1 | |
| Summe | | 100,00 | 100,00 | 100,00 | 100,00 | 100,00 | |
| Flüssigkomp. [%] | | | | | | | |
| Acrylatpolymer | Polymerdispersion(en) | 48,17 | 48,17 | 48,17 | 48,17 | 48,17 | |
| PU-Polymer | | 0 | 0 | 0 | 0 | 0 | |
| Naturkautschuk-Polymer | | 5,83 | 5,83 | 5,83 | 5,83 | 5,83 | |
| Wasser | | 45,5 | 45,5 | 45,5 | 45,5 | 45,5 | |
| Entschäumer | Additive | 0,2 | 0,2 | 0,2 | 0,2 | 0,2 | |
| Verdicker | | 0,3 | 0,3 | 0,3 | 0,3 | 0,3 | |
| Summe | | 100,00 | 100,00 | 100,00 | 100,00 | 100,00 | |
| Mischungsverhältnis PK : FK | | 1 | 1 | 1 | 1 | 1 | |
| Polymere [Gew.-%] | Jeweils bezogen auf die gesamte Masse des flüssig aufzubringenden Reaktivdachabdichtungsmittels | 27 | 27 | 27 | 27 | 27 | |
| mineralische Bindemittel [Gew.-%] | | 9,01 | 10,79 | 13,49 | 18,05 | 21,66 | |
| Verhältnis Gew.-% Polymere zu Gew.-% mineralische Bindemittel | | 3,00 | 2,50 | 2,00 | 1,50 | 1,25 | |
| Armierungsvlies | | Nein | Nein | Nein | Nein | Nein | |
| Anteil PU-Polymer an Gesamtmasse Polymere | | 0,0% | 0,0% | 0,0% | 0,0% | 0,0% | |
| Höchste gemessene Tg nach DSC der eingesetzten Polymere [°C] | | -35 | -35 | -35 | -35 | -35 | |
| Tieftemperaturelastizität minimale Temp. [°C] | | -35 | -30 | -20 | -5 | -5 | |
| Rissüberbrückung (1,5 mm) minimale Temp. [°C] | | -35 | -35 | -35 | -30 | -20 | |

| | | P36 | P37 | P38 | P39 | P40 | |
|---|---|---|---|---|---|---|---|
| Pulverkomp. [%] | | | | | | | |
| Aluminatzement | mineralisches Bindemittelsystem | 11,38 | 11,38 | 11,38 | 11,38 | 11,38 | |
| Portlandzement | | 2,84 | 2,84 | 2,84 | 2,84 | 2,84 | |
| Calciumsulfathalbhydrat | | 3,79 | 3,79 | 3,79 | 3,79 | 3,79 | |
| Füllstoff | Füllstoffe | 64,99 | 64,99 | 64,99 | 64,99 | 64,99 | |
| Leichtfüllstoff | | 16 | 16 | 16 | 16 | 16 | |
| Additive | Additive | 1 | 1 | 1 | 1 | 1 | |
| Summe | | 100,00 | 100,00 | 100,00 | 100,00 | 100,00 | |
| Flüssigkomp. [%] | | | | | | | |
| Acrylatpolymer | Polymerdispersion(en) | | | | 45,9 | 37,8 | |
| Acrylatpolymer 2 | | 53,46 | | | | | |
| Styrolacrylatpolymer | | | 53,46 | | | | |
| Acrylatpolymer 3 | | | | 53,46 | | | |
| PU-Polymer | | 0,54 | 0,54 | 0,54 | 2,7 | 5,4 | |
| Naturkautschuk-Polymer | | 0 | 0 | 0 | 5,4 | 10,8 | |
| Wasser | | 45,5 | 45,5 | 45,5 | 45,5 | 45,5 | |
| Entschäumer | Additive | 0,2 | 0,2 | 0,2 | 0,2 | 0,2 | |
| Verdicker | | 0,3 | 0,3 | 0,3 | 0,3 | 0,3 | |
| Summe | | 100,00 | 100,00 | 100,00 | 100,00 | 100,00 | |
| Mischungsverhältnis PK : FK | | 1 | 1 | 1 | 1 | 1 | |
| Polymere [Gew.-%] | Jeweils bezogen auf die gesamte Masse des flüssig aufzubringenden Reaktivdachabdichtungsmittels | 27 | 27 | 27 | 27 | 27 | |
| mineralische Bindemittel [Gew.-%] | | 9,01 | 9,01 | 9,01 | 9,01 | 9,01 | |
| Verhältnis Gew.-% Polymere zu Gew.-% mineralische Bindemittel | | 3,00 | 3,00 | 3,00 | 3,00 | 3,00 | |
| Armierungsvlies | | Nein | Nein | Nein | Nein | Nein | |
| Anteil PU-Polymer an Gesamtmasse Polymere | | 1% | 1% | 1% | 5% | 10% | |
| Höchste gemessene Tg nach DSC der eingesetzten Polymere [°C] | | -55 | -30 | -27 | -35 | -35 | |
| Tieftemperaturelastizität minimale Temp. [°C] | | -35 | -25 | -20 | -35 | -35 | |
| Rissüberbrückung (1,5 mm) minimale Temp. [°C] | | -35 | -20 | -20 | -35 | -35 | |

| | | P41 | P42 | P43 | | P44 | |
|---|---|---|---|---|---|---|---|
| Pulverkomp. [%] | | | | | | | |
| Aluminatzement | mineralisches Bindemittelsystem | 11,38 | 11,38 | 11,38 | | 11,38 | |
| Portlandzement | | 2,84 | 2,84 | 2,84 | | 2,84 | |
| Calciumsulfathalbhydrat | | 3,79 | 3,79 | 3,79 | | 3,79 | |
| Füllstoff | Füllstoffe | 64,99 | 64,99 | 64,99 | | 64,99 | |
| Leichtfüllstoff | | 16 | 16 | 16 | | 16 | |
| Additive | Additive | 1 | 1 | 1 | | 1 | |
| Summe | | 100,00 | 100,00 | 100,00 | | 100,00 | |
| Flüssigkomp. [%] | | | | | | | |
| Acrylatpolymer | Polymerdispersion(en) | 48,6 | 45,9 | 43,2 | | 37,8 | |
| Acrylatpolymer 2 | | | | | | | |
| Styrolacrylatpolymer | | | | | | | |
| Acrylatpolymer 3 | | | | | | | |
| PU-Polymer | | 5,4 | 8,1 | 10,8 | | 16,2 | |
| Naturkautschuk-Polymer | | 0 | 0 | 0 | | 0 | |
| Wasser | | 45,5 | 45,5 | 45,5 | | 45,5 | |
| Entschäumer | Additive | 0,2 | 0,2 | 0,2 | | 0,2 | |
| Verdicker | | 0,3 | 0,3 | 0,3 | | 0,3 | |
| Summe | | 100,00 | 100,00 | 100,00 | | 100,00 | |
| Mischungsverhältnis PK : FK | | 1 | 1 | 1 | | 1 | |
| Polymere [Gew.-%] | Jeweils bezogen auf die gesamte Masse des flüssig aufzubringenden Reaktivdachabdichtungsmittels | 27 | 27 | 27 | | 27 | |
| mineralische Bindemittel [Gew.-%] | | 9,01 | 9,01 | 9,01 | | 9,01 | |
| Verhältnis Gew.-% Polymere zu Gew.-% mineralische Bindemittel | | 3,00 | 3,00 | 3,00 | | 3,00 | |
| Armierungsvlies | | Nein | Nein | Nein | | Nein | |
| Anteil PU-Polymer an Gesamtmasse Polymere | | 10% | 15% | 20% | | 30% | |
| Höchste gemessene Tg nach DSC der eingesetzten Polymere [°C] | | --35 | -35 | -35 | | -35 | |
| Tieftemperaturelastizität minimale Temp. [°C] | | -35 | -35 | -35 | | -35 | |
| Rissüberbrückung (1,5 mm) minimale Temp. [°C] | | -35 | -35 | -35 | | -35 | |

### Herstellung der Proben

Es wurden 6 Zusammensetzungen von flüssig aufzubringenden Reaktivdachabdichtungen erzeugt durch Mischen einer Acrylatpolymer enthaltenden Flüssigkomponente mit einer Pulverkomponente, wobei der Polymeranteil zum Anteil der mineralischen Bindemittel bezüglich Gew.-% variiert wurde, indem sukzessiv der Anteil des Füllstoffs verringert und der Anteil des mineralischen Bindemittels entsprechend erhöht wurde, sodass sich die in Tabelle 1 für P1 - P6 aufgeführten Verhältnisse von Gew.-% Polymer zu Gew.-% mineralischem Bindemittel ergeben. Die Angabe Gew.-% bezieht sich auf das jeweilige Verhältnis zur Gesamtmasse der flüssig aufzubringenden Reaktivdachabdichtung.

Von jeder dieser 6 Zusammensetzungen wurden jeweils eine weitere Beispielmischung erzeugt, in die ein Vlies eingebettet wurde. Die Proben sind als P7 - P12 bezeichnet. Bei der Einbettung des Vlieses wurde darauf geachtet, dass das Vlies vollflächig und blasenfrei in der flüssig aufzubringende Reaktivbaustoff eingebettet wurde.

Es wurden weiterhin jeweils 6 Zusammensetzungen von flüssig aufzubringenden Reaktivdachabdichtungen erzeugt durch Mischen einer Flüssigkomponente mit einer Pulverkomponente mit einer Zusammensetzung abgeleitet von P1 - P6, wobei der Anteil an PU-Polymer bezogen auf die Masse der Flüssigkomponente 1%, 2% und 5% betrug, bzw. in Bezug auf die Gesamtmasse der Polymere 1,9%, 3,7% und 9,4%. Dabei wurde ein entsprechender Acrylatpolymer durch den Anteil PU-Polymer substituiert. Die Proben sind als P13 - P30 bezeichnet.

Weiterhin wurden 5 Zusammensetzungen von flüssig aufzubringenden Reaktivdachabdichtungen erzeugt durch Mischen einer Flüssigkomponente mit einer Pulverkomponente mit einer Zusammensetzung abgeleitet von P1 - P5, wobei ein Teil des Acrylatpolymers durch konditioniertes Naturlatex ersetzt wurde. Die Proben sind als P31 - P35 bezeichnet.

Proben P36 - P40 unterscheiden sich von den vorherigen Proben durch eine veränderte Zusammensetzung der Polymerdispersion.

In Probe P36 wurde ein Acrylatpolymer mit einer T_{g} = -55°C (Acrylatpolymer 2) verwendet. In Probe P37 wurde ein Styrolacrylatpolymer mit einer T_{g} = -30°C (Styrolacrylatpolymer) verwendet. In Probe P38 wurde ein Acrylatpolymer mit einer T_{g} = -27°C (Acrylatpolymer 3) verwendet.

In den Proben P39 und P40 sind die Polymerdispersionen Mischungen von Acrylatpolymer, PU-Polymer und Naturkautschuk-Polymer insbesondere mit variierendem PU-Anteil.

In den Proben P41 - P44 wird der Anteil an PU-Polymer an der eingesetzten Polymermischung sukzessive von 10 - 30% erhöht.

Als Vergleichsbeispiel diente eine Zusammensetzung eines handelsüblichen Abdichtungsproduktes (Ref 1), die nach DE 20 2005 015 351 U1 zusammengesetzt ist und unter anderem einen Polymeranteil von dem 1,58-fachen des Anteils mineralischer Bindemittel aufweist.

Als weiteres Vergleichsbeispiel (Ref 2) diente eine unter dem Handelsnamen MB TX 2K erhältliche Zusammensetzung der Anmelderin, die einen Polymeranteil von weniger als dem 1,5-fachen des Anteils mineralischer Bindemittel aufweist, nämlich das 1,25-fache.

Als noch weiteres Vergleichsbeispiel (Ref 3) diente schließlich eine unter dem Handelsnamen MB 2K+ erhältliche Zusammensetzung der Anmelderin, die einen Polymeranteil von weniger als dem 2-fachen des Anteils mineralischer Bindemittel aufweist, nämlich das 1,65-fache.

Außerdem wurden zwei Abmischungen analog zu den Beispielen 1, 2 und 3 aus WO 2012/038099 A1 hergestellt (Ref 4, Ref 5 und Ref 6). Die Herstellung der Beispiele Ref 4, Ref 5 und Ref 6 erfolgte nach der darin beschriebenen Lehre. Ref 10 wies einen Polymeranteil von dem 2,5-fachen des Anteils mineralischer Bindemittel auf. Ref 11 wies einen Polymeranteil von dem 1,8-fachen des Anteils mineralischer Bindemittel auf. Ref 12 wies einen Polymeranteil von dem 1,5-fachen des Anteils mineralischer Bindemittel auf.

Das Mischen der Komponenten wurde in allen Beispielen und Vergleichsbeispielen jeweils so durchgeführt, dass die Mischung am Ende des Mischprozesses klumpenfrei und knotenfrei vorlag.

Die untersuchten Schichtdicken lagen sämtlich zwischen 1,9 mm und 2,3 mm.

| Probennr. | Zusammensetzung | Verhältnis Polymer / min. Bindemittel |
|---|---|---|
| Ref 1 | Handelsübliches Produkt | 1,25 |
| Ref 2 | MB TX 2K | 1,25 |
| Ref 3 | MB 2K+ | 1,65 |
| Ref 4 | Beispiel 1 aus WO 2012/038099 A1 | 2,5 |
| Ref 5 | Beispiel 2 aus WO 2012/038099 A1 | 1,8 |
| Ref 6 | Beispiel 3 aus WO 2012/038099 A1 | 1,5 |

### Prüfung der Rissüberbrückung

Das Reaktivdachabdichtungsmittel der Proben P1 - P44 und Ref 1 - Ref 6 wurden jeweils auf zwei starr über eine quadratische Grundfläche verbundene Mörtelprismen (16x4x4 cm³), im weiteren als Betonprismen bezeichnet, in der Mindesttrockenschichtdicke eine der so entstandenen rechteckigen Doppelflächen mit mittiger Fuge (32x4 cm²) so aufgebracht, dass die Fuge überdeckt und die Betonprismen nach Aushärtung des Reaktivdachabdichtungsmittels ausschließlich durch das Reaktivdachabdichtungsmittel verbunden sind. Die Reaktivdachabdichtungsmittel wurden 28 Tage bei 20°C und 50% relativer Luftfeuchtigkeit aushärten lassen.

Der Konditionierungszeiträum von 28 Tagen ist in Anlehnung an die internen Prüfungen und Erfahrungen und an die gängigen Prüfgrundsätze PG-MDS/FPD (Stand: November 2016) für Reaktivabdichtungen im Sockelbereich gewählt worden. Diese sind seit vielen Jahren als Stand der Technik etabliert und bilden damit in hohem Maße eine Langzeitsicherheit der Materialeigenschaften ab.

Daraufhin wurde das Reaktivdachabdichtungsmittel in dem skizzierten Versuchsaufbau (vgl. Figur 4) in eine Kühlstation eingelagert und auf -30°C heruntergekühlt. Nach einer Stunde Konditionierung bei -30°C wurde der Riss zwischen den Betonprismen auf 0,5 mm aufgeweitet und der Versuchsaufbau für eine Stunde bei -30°C gelagert. Danach wurde der Riss zwischen den Betonprismen auf 1 mm aufgeweitet und der Versuchsaufbau für eine Stunde bei -30°C gelagert. Danach wurde der Riss zwischen den Betonprismen auf 1,5 mm aufgeweitet und der Versuchsaufbau für mindestens eine Stunde bei -30°C gelagert. Die Beurteilung der Probekörper fand durch optische Kontrolle des Reaktivdachabdichtungsmittels auf Versagen als Abdichtung oberhalb des aufgeweiteten Risses zwischen den Betonprismen statt, d.h. es wurde geprüft, ob das Reaktivdachabdichtungsmittel selbst Risse zeigte. Dabei konnten Risse von > 100 µm zuverlässig identifiziert werden.

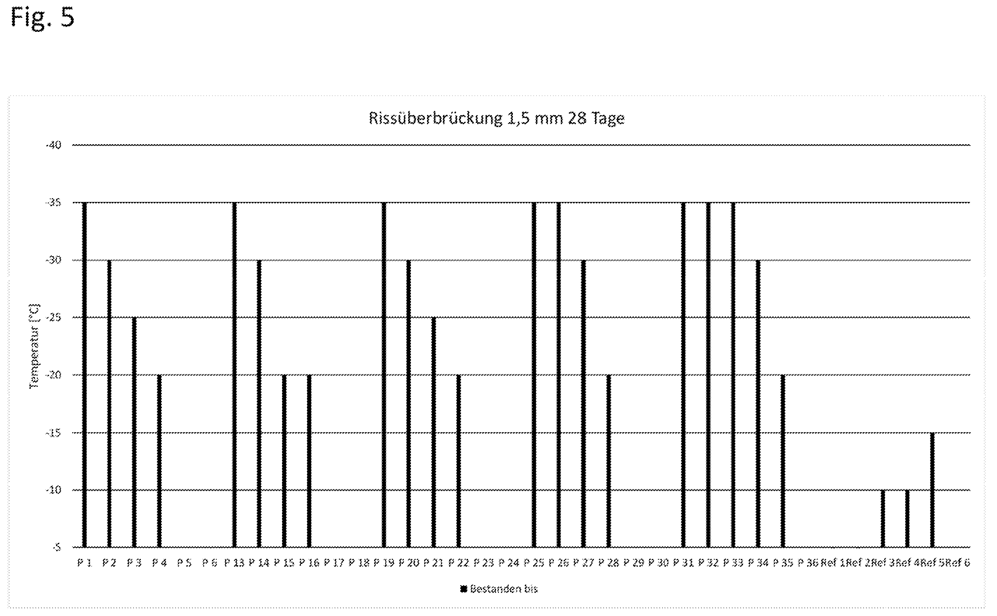

Die Ergebnisse nach der 28-Tage Konditionierung sind Figur 5 dargestellt.

Für die Proben P1 und P2 konnte die Rissüberbrückung bis 1,5 mm für Temperaturen bis -30°C erreicht werden. Für die Probe P1 konnte die Rissüberbrückung bis 1,5 mm auch noch für Temperaturen bis -35°C erreicht werden. Für die Probe P3 konnte die Rissüberbrückung bis 1,5 mm für Temperaturen bis -25°C erreicht werden. Für die Probe P4 konnte die Rissüberbrückung bis 1,5 mm für Temperaturen bis -20°C erreicht werden.

Für die Proben P5 und P6 konnte bei Temperaturen kleiner -5°C keine Rissüberbrückung bis 1,5 mm erreicht werden.

Für die Proben P13 und P14, P19 und P20, P25, P26 und P27, P31 bis P34, sowie P36, P39 und P40 konnte die Rissüberbrückung bis 1,5 mm für Temperaturen bis -30 °C erreicht werden. Für die Proben P13, P19, P25 und P26, sowie P31 - P 33, sowie P36, P39 und P40 konnte die Rissüberbrückung bis 1,5 mm auch noch für Temperaturen bis -35°C erreicht werden. Für die Probe P21 konnte die Rissüberbrückung bis 1,5 mm für Temperaturen bis -25°C erreicht werden.

Für die Proben P15, P16, P22, P28. P35, P37 und P38 konnte die Rissüberbrückung bis 1,5 mm für Temperaturen bis -20°C erreicht werden.

Für die Proben P41 - P44 konnte die Rissüberbrückung bis 1,5 mm für Temperaturen bis -35°C erreicht werden.

Im Vergleich dazu konnte für die Referenzproben Ref 1, Ref 2, Ref 3, Ref 4, Ref 5 und Ref 6 bei Temperaturen kleiner -15°C keine Rissüberbrückung bis 1,5 mm erreicht werden.

Zusammenfassend ließ sich erkennen, dass die geschilderten Eigenschaften des Reaktivdachabdichtungsmittels einen entsprechenden Einfluss auf die Rissüberbrückung haben. So zeigte sich unabhängig von weiteren Eigenschaften eine Verschlechterung der Rissüberbrückung mit abnehmendem Verhältnis von Gew.-% Polymer zu Gew.-% mineralischem Bindemittel. Zusätzlich zeigte sich, dass nur solche Beispiele, die ausschließlich Polymere mit gemessener T_{g} von kleiner -20 °C enthalten, die Anforderung an die Rissüberbrückung bei niedrigen Temperaturen erfüllten. Beispielsweise die Referenzproben Ref 1 - Ref 6 weisen keine entsprechend niedrige gemessene T_{g} der Polymere auf und konnten die Rissüberbrückung von 1,5 mm bei Temperaturen von kleiner -20°C nicht erreichen.

Darüber hinaus konnte gezeigt werden, dass ein Anteil von 5% PU-Polymer und mehr, bezogen auf die Gesamtmasse der Polymere, eine Verbesserung der rissüberbrückenden Eigenschaften für die Probe P27 im Vergleich zu den entsprechenden Proben P15, und P21 mit gleichem Verhältnis Bindemittel zu Polymer erreicht wurde.

### Prüfung der Tieftemperaturflexibilität

Die Flexibilitätsprüfung erfolgt in Anlehnung an die Prüfung des Kaltbiegeverhaltens nach DIN 52123, Stand 08/1985.

Das Reaktivdachabdichtungsmittel der Proben P1 - P44 und Ref 1 bis Ref 6 wurden darüber hinaus bei Temperaturen von -10°C bis -35°C in Fünfgradschritten heruntergekühlt und nach jeweils 24 Stunden Lagerung über einen Zylinder mit einem Durchmesser von 4 cm gebogen. Die Beurteilung der Probekörper fand durch optische Kontrolle des Reaktivdachabdichtungsmittels auf Ausbildung von Rissen statt. Dabei konnten Risse von > 100 µm zuverlässig identifiziert werden.

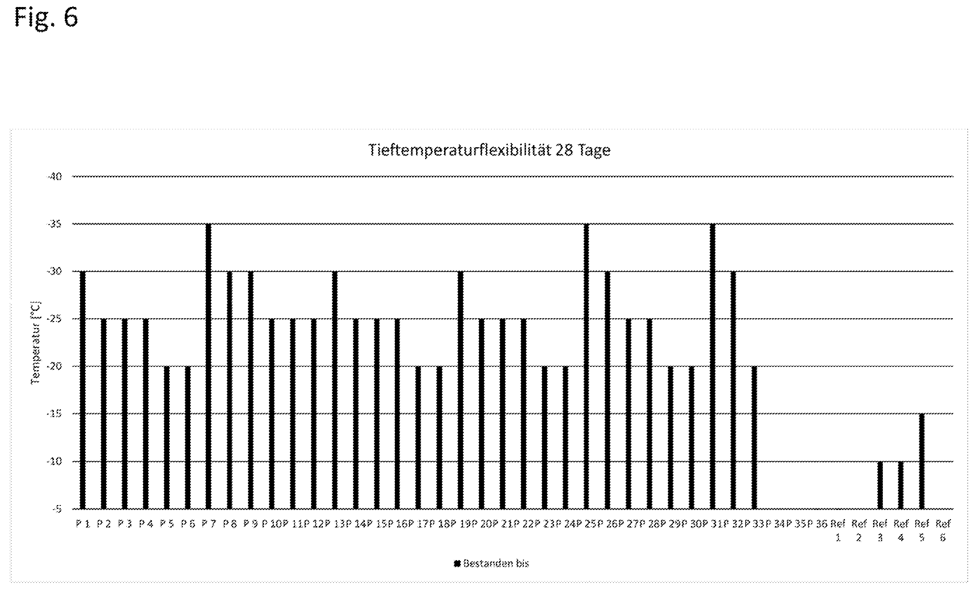

Die Ergebnisse für die 28-Tage Konditionierung sind in Figur 6 dargestellt.

Die Proben P1, P7, P8, P9, P13, P19, P25, P26, P31, P32, P36, P39 und P40 bestanden den Test zumindest bis -30 °C. Die Proben P2, P3, P4, P10, P11, P12, P14, P15, P16, P20, P21, P22, P27, P28 und P37 zeigten keine Risse bis -25°C. Die Proben P5, P6, P17, P18 und P23, P24, P29, P30, P33, P35 und P38 zeigten keine Risse bis -20 °C.

Die Referenzprobe Ref 5 zeigte keine Risse bis -15°C. Die Referenzproben Ref 1, Ref 2, Ref 3, Ref 4 und Ref 6 zeigten Risse bei Temperaturen von mehr als -15°C.

Es zeigte sich, dass sich erfindungsgemäßen Eigenschaften des flüssig aufzubringenden Reaktivbaustoffs in Bezug auf die Tieftemperaturflexibilität ohne Armierung oder Einbettung von Vlies, Fasern oder Gewebe erreicht werden konnten. Durch die Einbettung von Vlies oder durch Einsatz von PU ließen sich tiefere Temperaturen erreichen, wie Proben P7, P25, P31, P39, P40, P41, P42, P43 und P44 zeigen. Auch für die Tieftemperaturflexibilität zeigt sich, dass sowohl das Verhältnis von Gew.-% Polymer zu Gew.-% mineralische Bindemittel, Gew.-% bezieht sich hier auf die Gesamtmasse des Reaktivdachabdichtungsmittels, als auch die T_{g} der eingesetzten Polymere eine entscheidende Rolle spielen.

### Prüfung der Zugeigenschaften

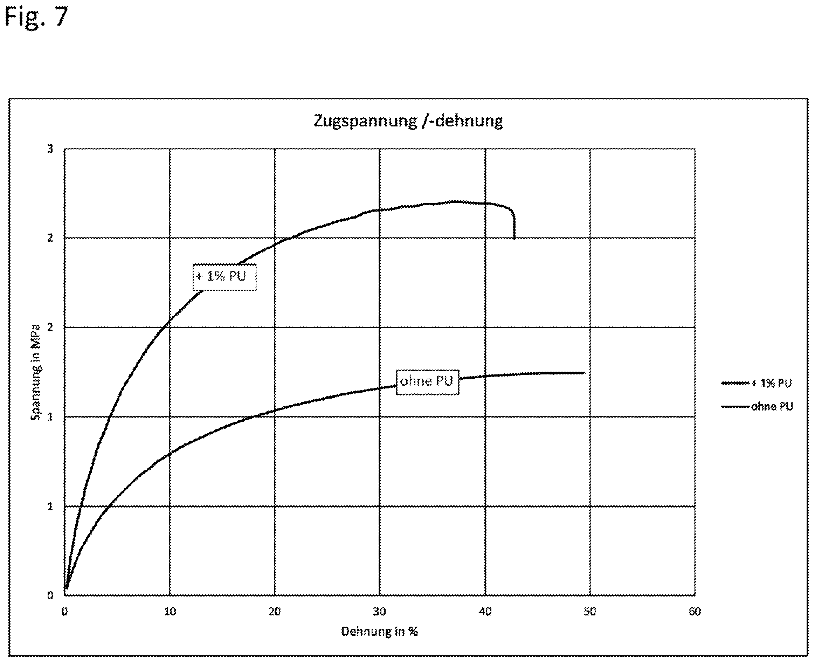

Aus dem Reaktivabdichtungsmittel wurden Probekörper Zugstab Typ 1B, gem. DIN EN ISO 527-2 für die Untersuchung der Zugeigenschaften gemäß DIN EN ISO 527-1:2019-12 "Kunststoffe - Bestimmung der Zugeigenschaften" für die Proben P1 und P13 hergestellt. Dafür wurde das flüssige Reaktivdachabdichtungsmittel auf einer mit Teflonfolie beschichteten Glasplatte (30 x 60 cm) in einer Schichtstärke von 2,4 mm aufgebracht. Nach 28 Tage Konditionierung bei Normbedingungen wurden aus den erhaltenen Filmen die Probekörper hergestellt. Die Prüfung der Zugeigenschaften erfolgte an einer Zwickiline DO731920 nach Normvorgaben. Die Ergebnisse sind in Figur 7 dargestellt.

Es zeigte sich, dass die Probe P13 (2,2 N/mm²) eine um über 70% höhere Zugspannung erreichte als die Probe P1 (1,24 N/mm²), während die Dehnung bei Maximalspannung um ca. 13% von 49,4% (P1) auf 42,8% (P13) sank. Folglich erzeugt bereits ein geringer Anteil an PU-Polymer an der Gesamtmenge Polymer in dem Reaktivdachabdichtungsmittel eine deutliche Steigerung der inneren Spannung des Systems bei vernachlässigbarer Reduktion der Dehnung bei Maximalspannung. Erfahrungsgemäß führt eine Optimierung von Reaktivabdichtungssystemen hinsichtlich Maximalspannung und Dehnung bei Maximalspannung zu einer optimierten Rissüberbrückungsfähigkeit des Systems. Es erscheint folglich sinnvoll, dass der explizite Zusatz von PU-Polymer eine Verbesserung der Reaktivdachabdichtung nach sich zieht.

### Prüfung nach ETAG 005

Weitere Reaktivdachabdichtungen nach P1 und P13 wurden erzeugt und einer Prüfung in Anlehnung an die ETAG 005, der darauf aufbauenden DIN 18531 und der deutschen Flachdachrichtlinie gemäß der Leistungsklassen in der ETAG 005 unterworfen.

Die Prüfparameter umfassten dabei insbesondere das Rissüberbrückungsvermögen, die Haftung auf diversen Untergründen und das Alterungsverhalten bei Hitze, heißen Wasser und UV-Alterung, sowie in allen Fällen die Sicherstellung der Wasserdichtigkeit der Abdichtung, sodass das Eindringen von Wasser in die mit der Dachabdichtung versehenen Untergründe verhindert wird und auf diese Weise die Substrate vor Wasserschäden bewahrt werden.

Die Reaktivdachabdichtungen nach P1 und P13 bestanden den Test jeweils mit einer Einstufung W3 nach der Durchführung des im EOTA TR-008 angegebenen Verfahrens.

Sie zeigten sich rissüberbrückend für Risse bis mindestens 1,5 mm nach der Durchführung des im EOTA TR-013 angegebenen Verfahrens.

Ferner wurde erfolgreich eine Klassifizierung BROOF T1 nach DIN EN 13501-5:2016-12 durchgeführt.

### Visualisierung des Reaktionsverlaufs

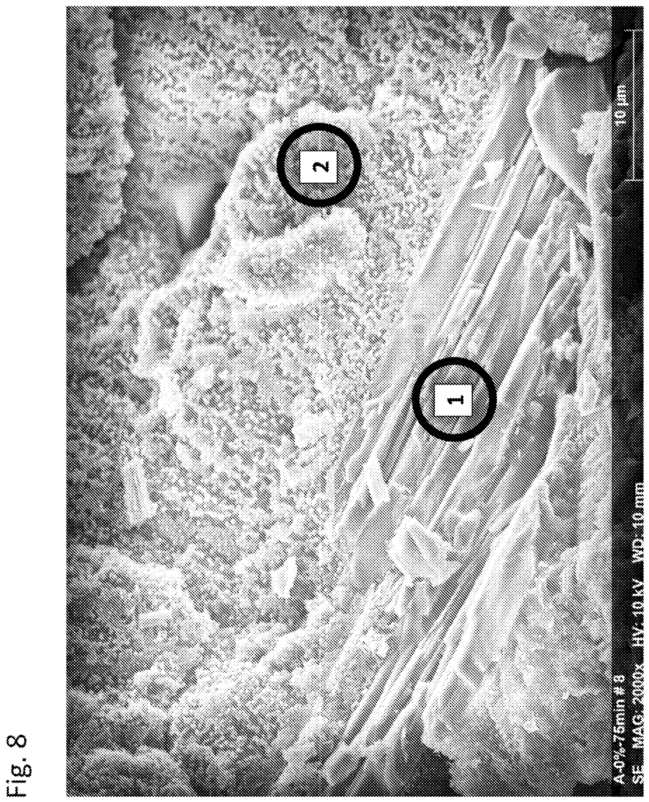

In den Figuren 8 - 13 sind Ergebnisse mikroskopischer und spektroskopischer Messungen an einer Reaktivabdichtung nach P1 dargestellt.

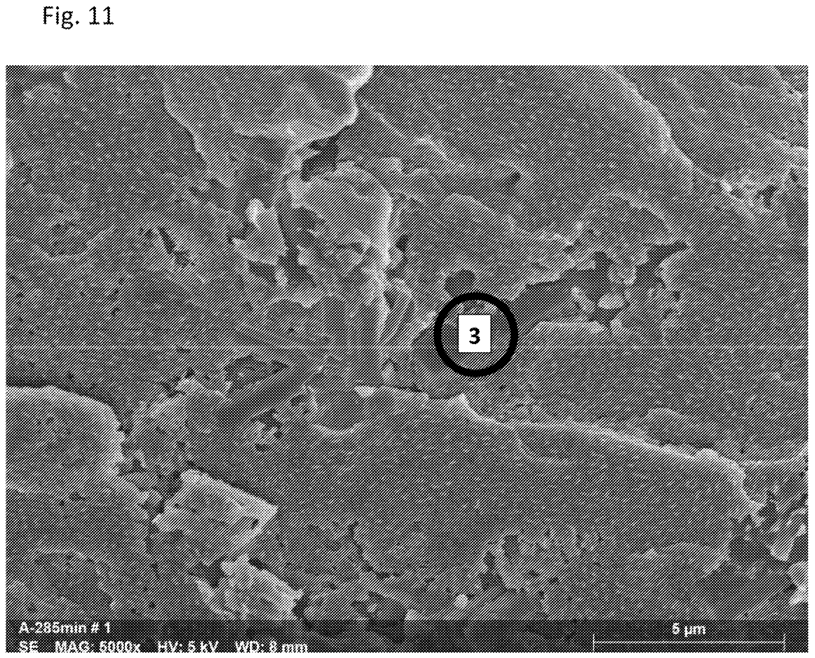

Die Probe wurde nach Anmischung der Flüssigkomponente und der Pulverkomponente in der Mitte an verschiedenen Zeitpunkten in der Mitte durchgebrochen. Die Bruchkante wurde jeweils mit einem Cryo-REM (Rasterelektronenmikroskop) und mithilfe energiedispersiver Röntgenspektroskopie (EDX) untersucht. Figuren 8 - 10 beziehen sich dabei auf einen Zeitpunkt von 75 min nach der Anmischung. Figuren 11 - 13 beziehen sich auf einen Zeitpunkt von 285 min nach der Anmischung.

In Figur 8 ist im Kreis mit Nummer "1" eine anorganische Phase mit einer flächigen, kantigen Struktur zu erkennen, welche nicht vollständig umgesetztes Halbhydrat darstellt. Im Kreis mit der Nummer "2" ist eine schaumartige Phase zu erkennen, welche das Zusammenwachsen von Polymerkugeln darstellt. Die flächigen und schaumartigen Strukturen sind zu diesem Zeitpunkt noch voneinander separiert.

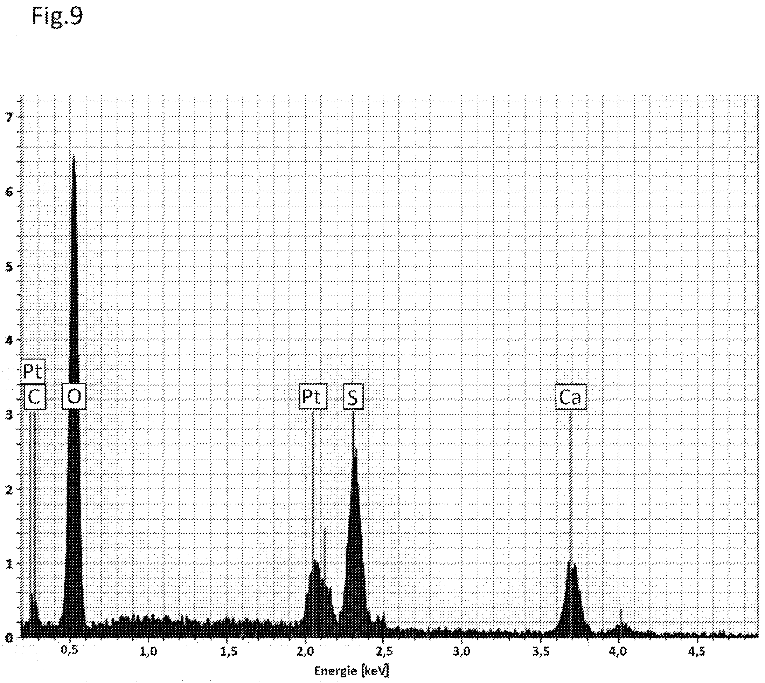

Figur 9 zeigt die energiedispersive röntgenspektroskopische Analyse (EDX) des Bereichs "1" in Figur 8. Das Spektrogramm zeigt im Wesentlichen 6 Peaks. Zwei Peaks davon sind dem Element Platin zuzuordnen, das zwecks Durchführung der Cryo-REM Aufnahme aufgebracht wurde. Die weiteren Peaks entsprechen den Elementen Kohlenstoff, Sauerstoff, Schwefel und Kalzium. Diese Elemente sind mit Ausnahme des Kohlenstoffs (Ursprung aus der organischen Phase) im Wesentlichen dem Sulfatträger des mineralischen Bindesystems zuzuordnen. Die Abwesenheit von Aluminium deutet darauf hin, dass es sich nicht um Ettringit handeln kann. Die flächige Struktur in "1" ist daher wahrscheinlich nicht umgesetztes Halbhydrat.

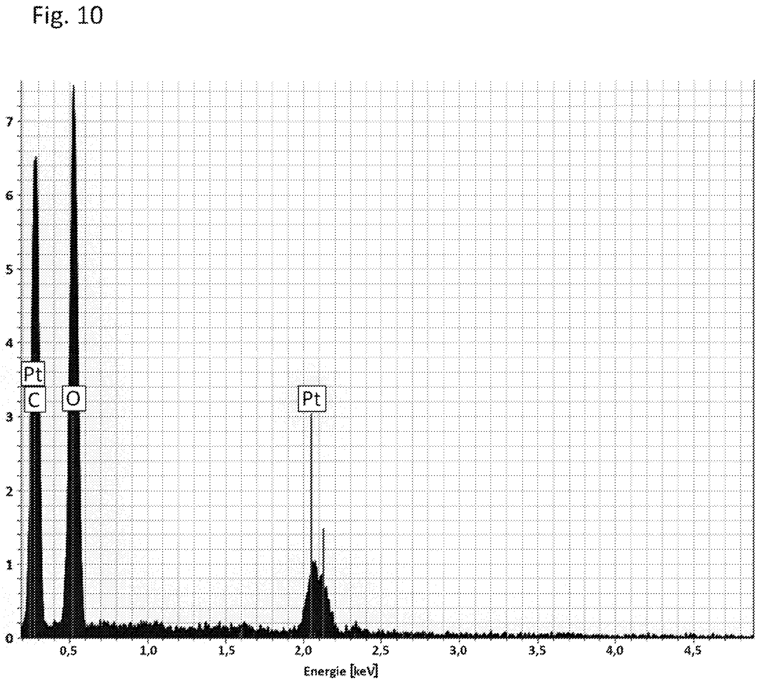

Figur 10 zeigt die energiedispersive röntgenspektroskopische Analyse des Bereichs "2" in Figur 8. Das Spektrogramm zeigt im Wesentlichen 4 Peaks. Zwei Peaks davon sind Platin zuzuordnen, das zwecks Durchführung der Cryo-REM Aufnahme aufgebracht wurde. Die weiteren Peaks entsprechen den Elementen Kohlenstoff und Sauerstoff. Diese Elemente sind dem Acrylatpolymer zuzuordnen, das zusammenhängende, zunächst schaumartige, später filmartig vernetzte Strukturen ausbildet.

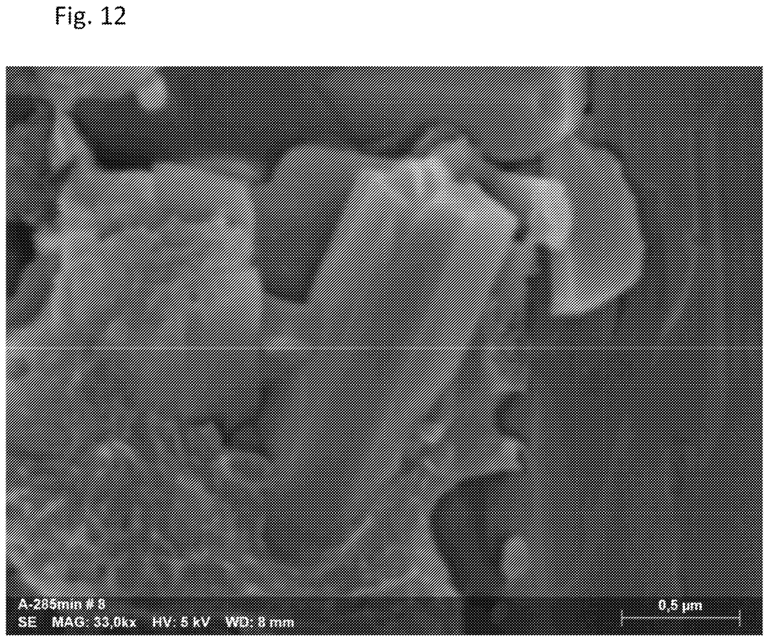

In Figuren 11 und 12 ist die Probe zu einem späteren Zeitpunkt der Aushärtung dargestellt. Der inzwischen ausgebildete Ettringit zeigt sich in Figur 11 in Form von clusterförmigen sternartigen Strukturen, die jeweils aus hexagonalen Nadeln gebildet sind. Der Ettringit ist dabei vollständig in der Polymermatrix eingebettet. Figur 12 zeigt nochmals deutlicher den sich aus dem hexagonalen Kristallsystem ergebenden hexagonalen Querschnitt einer Ettringitnadel, welche die Polymermatrix durchstößt.

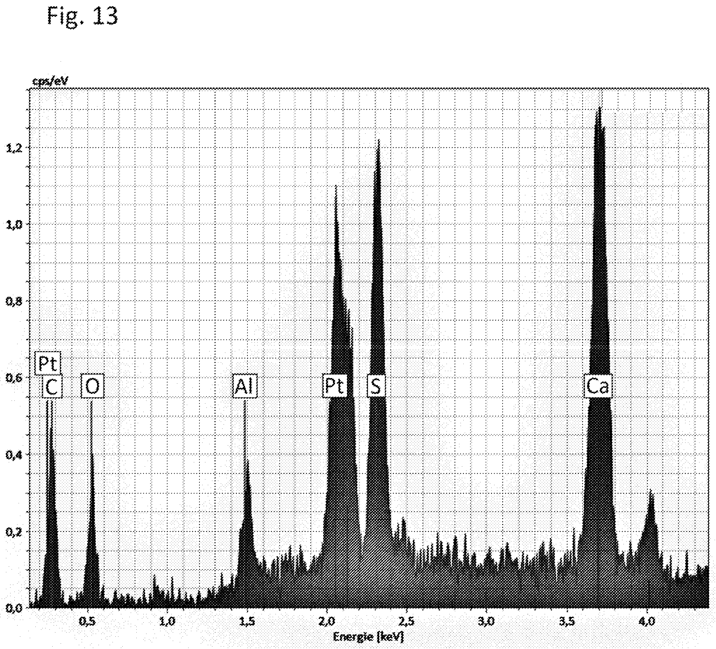

Figur 13 zeigt die energiedispersive röntgenspektroskopische Analyse des Bereichs "3" in Figur 11. Das Spektrogramm zeigt hier im Wesentlichen 7 Peaks. Zusätzlich zu den in Figur 9 vorhandenen Peaks ist hier bei 1,49 keV die K-Alpha Linie des Aluminiums zu erkennen. Die Anwesenheit von Aluminium zeigt, dass es sich um das Reaktionsprodukt Ettringit handelt.

### Messung der Aushärtegeschwindigkeit

Zur Messung der Aushärtegeschwindigkeit wurde das Gerät IP-8 Ultraschall-Multiplexer-Tester V6 der Fa. Ultratest verwendet.

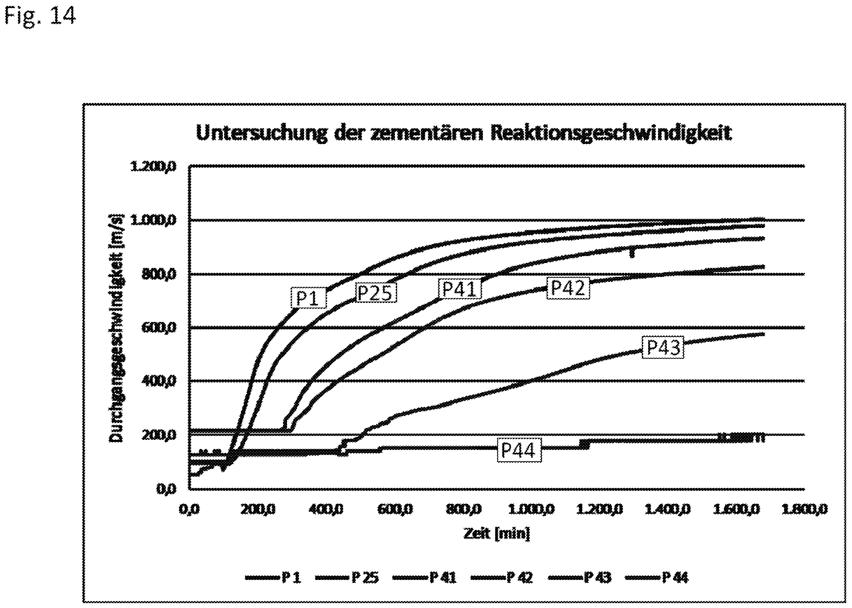

Figur 14 zeigt Ultraschallmessungen, welche an Proben entsprechend P1, P25, P41, P42, P43 und P44 durchgeführt wurden. Bei diesen Proben ist der PU-Anteil unterschiedlich. Bei P1 ist kein PU vorhanden, bei P25 liegt der Anteil von PU bei 5%, bei P41 liegt der Anteil von PU bei 10%, bei P42 liegt der Anteil von PU bei 15%, bei P43 liegt der Anteil von PU bei 20% und bei P44 bei 30%.

Im vorliegenden Versuch wurden die Proben angemischt und sofort in einen Messbehälter mit jeweils einem Maß von 2 cm Breite, einer Länge von 6 cm sowie einer Höhe von 5 cm ohne Lufteinschlüsse eingefüllt. Von der Seitenmitte her sendete ein Ultraschallsender in Zeitabständen von 1 min Impulse quer durch die aushärtende Probe. Gegenüber dem Sender wurden die Impulse von einem Ultraschallempfänger erfasst. Die Geschwindigkeit des Ultraschallsignals wurde jeweils ermittelt.

Aus dem vorliegenden Versuchsaufbau lassen sich Rückschlüsse über die Aushärtegeschwindigkeit treffen. In nicht ausgehärteten, noch flüssigen Proben kann sich ein Ultraschallsignal nur langsam ausbreiten. Erst bei einsetzender Aushärtung steigt die Durchlaufgeschwindigkeit des Ultraschallsignals.

Während bei P1 und P25 bereits nach ca. 110 Minuten ein Ansteigen der Durchgangsgeschwindigkeit beobachtet wurde, wobei bei P25 eine im Vergleich langsamere Zunahme der Durchgangsgeschwindigkeit beobachtet wurde, war dies bei P41 und P42 erst nach ca. 300 Minuten der Fall. Bei P41 und P42 ist darüber hinaus eine im Vergleich zu P1 und P25 noch weiter verlangsamte Zunahme der Durchgangsgeschwindigkeit beobachtet worden. Bei P43 und P44 wurde der Anstieg erst nach ca. 450 Minuten beobachtet. Für P44 war die Zunahme der Durchgangsgeschwindigkeit fast nicht mehr beobachtbar.

Aus den Ergebnissen konnte geschlussfolgert werden, dass eine Erhöhung des PU Anteils an der Polymerzusammensetzung sowohl eine Verzögerung als auch eine Verlangsamung der Aushärtung nach sich zieht.

Im Ergebnis sind Proben mit mehr als 20% PU-Anteil aufgrund des späten Einsetzens und der langsamen Aushärtung in der Praxis nicht mehr geeignet für Reaktivdachabdichtung. Bei Proben mit weniger als 20%, bevorzugt weniger als 15% PU-Anteil setzt die Aushärtung dagegen ausreichend früh ein, sodass die oben beschriebenen Vorteile in der Verwendung eines PU-Anteils überwiegen.

Die Erfindung ist nicht auf die hier beschriebenen Ausführungsbeispiele beschränkt und schließt eine Vielzahl von weiteren Alternativen ein, welche im Können und Wissen der Person des Fachs liegen, vorausgesetzt, dass sie innerhalb des Schutzbereichs der unabhängigen Ansprüche 1 und 9 fallen.

## Patentansprüche

1. Verwendung eines flüssig aufzubringenden Reaktivdachabdichtungsmittels zur Herstellung einer Dachabdichtung, wobei das flüssig aufzubringende Reaktivdachabdichtungsmittel eine Flüssigkomponente und eine Pulverkomponente aufweist,
wobei die Pulverkomponente ein mineralisches Bindemittelsystem bestehend aus mehreren in Kombination zur Ausbildung von einer Ettringit-Phase fähigen mineralische Bindemitteln umfasst und die Flüssigkomponente eine oder mehrere wässrige Polymerdispersionen umfasst,
wobei das flüssig aufzubringende Reaktivdachabdichtungsmittel in der Flüssigkomponente
| | Gew.-% | bevorzugt Gew.-% |
|---|---|---|
| Polymer | 30 - 70 | 50 - 60 |
enthält, wobei sich die Angabe auf den Feststoffgehalt an Polymeren in der Polymerdispersion und die Angabe Gew.-% auf das Gewicht der Flüssigkomponente beziehen,
wobei ein Anteil eines PU-Polymers höchstens 30% des Feststoffgehalts an Polymeren, bezogen auf die Gesamtmasse der Polymere, beträgt,
**dadurch gekennzeichnet, dass** das Reaktivdachabdichtungsmittel mindestens 2-mal, bevorzugt mindestens 2,5-mal, insbesondere mindestens 3-mal so viel Gew.-% Feststoffgehalt an Polymeren wie Gew.-% mineralische Bindemittel und höchstens 5-mal so viel Gew.-% Feststoffgehalt an Polymeren wie Gew.-% mineralische Bindemittel enthält, wobei sich die Angabe Gew.-% auf das Gewicht des flüssig aufzubringenden Reaktivdachabdichtungsmittels bezieht,
und dass mindestens 80 Gew.-% der eingesetzten Polymere, bezogen auf die Gesamtmasse der Polymere, eine Glasübergangstemperatur T_{g} von kleiner -20 °C, bevorzugt kleiner -30 °C aufweisen,
wobei die Glasübergangstemperatur T_{g} einer Polymerprobe durch dynamische Differenzkalorimetrie (DSC, DIN EN ISO 11357-2:2014-07 "Kunststoffe - Dynamische Differenz Thermoanalyse (DSC) - Teil 2: Bestimmung der Glasübergangstemperatur und der Glasübergangsstufenhöhe (ISO 11357-2:2013), Deutsche Fassung EN ISO 11357-2:2014") bestimmt wird.

2. Verwendung nach Anspruch 1,
**dadurch gekennzeichnet, dass** mindestens 90 Gew.-%, bevorzugt 100 Gew.-% der eingesetzten Polymere, bezogen auf die Gesamtmasse der Polymere, eine Glasübergangstemperatur T_{g} von kleiner -20 °C, bevorzugt kleiner -30 °C aufweisen.

3. Verwendung nach einem der vorhergehenden Ansprüche,
**dadurch gekennzeichnet, dass** der Anteil des PU-Polymers höchstens 20%, bevorzugt höchstens 15 % des Feststoffgehalts an Polymeren, bezogen auf die Gesamtmasse der Polymere, beträgt.

4. Verwendung nach einem der vorhergehenden Ansprüche,
**dadurch gekennzeichnet, dass** der flüssig aufzubringende Reaktivbaustoff in der Pulverkomponente
| | Gew.-% | bevorzugt Gew.-% |
|---|---|---|
| Mineralische Bindemittel | 10 - 30 | 15 - 20 |
enthält, wobei sich die Angabe Gew.-% auf das Gewicht des flüssig aufzubringenden Reaktivdachabdichtungsmittels bezieht.

5. Verwendung nach einem der vorhergehenden Ansprüche,
**dadurch gekennzeichnet, dass** zumindest eines der Polymere auf einem oder mehreren Monomeren aus der Gruppe umfassend (Meth-)Acrylate, Acrylnitril, Isocyanat, Polyole oder einer Kombination davon basiert, oder konditioniertes Naturlatex enthält.

6. Verwendung nach einem der vorhergehenden Ansprüche,
**dadurch gekennzeichnet, dass** zumindest eines der Polymere auf Reinacrylat, konditioniertem Naturlatex oder Polyurethan basiert.

7. Verwendung nach einem der vorhergehenden Ansprüche,
**dadurch gekennzeichnet, dass** die wässrige Polymerdispersion zwei oder mehr Polymere enthält, bevorzugt (Meth-)Acrylatpolymer und Polyurethan oder (Meth-)Acrylatpolymer und konditioniertes Naturlatex.

8. Verwendung nach einem der vorhergehenden Ansprüche,
**dadurch gekennzeichnet, dass** die Polymerdispersionen eine Mindestfilmbildetemperatur gemäß DIN 53787:02-74 von 0°C aufweisen.

9. Dachabdichtung, hergestellt durch Mischen einer Flüssigkomponente und einer Pulverkomponente, wobei die Pulverkomponente ein mineralisches Bindemittelsystem bestehend aus mehreren in Kombination zur Ausbildung von einer Ettringit-Phase fähigen mineralische Bindemitteln umfasst und die Flüssigkomponente eine oder mehrere wässrige Polymerdispersionen umfasst,
wobei ein Anteil eines PU-Polymers höchstens 30% des Feststoffgehalts an Polymeren, bezogen auf die Gesamtmasse der Polymere, beträgt,
**dadurch gekennzeichnet, dass** die Dachabdichtung mindestens 2-mal, bevorzugt mindestens 2,5-mal, insbesondere mindestens 3-mal so viel Gew.-% Feststoffgehalt an Polymeren wie Gew.-% mineralische Bindemittel und höchstens 5-mal so viel Gew.-% Feststoffgehalt an Polymeren wie Gew.-% mineralische Bindemittel enthält, wobei sich die Angabe Gew.-% auf das Gewicht des Reaktivdachabdichtungsmittels bezieht,
und dass mindestens 80 Gew.-% der eingesetzten Polymere, bezogen auf die Gesamtmasse der Polymere, eine Glasübergangstemperatur T_{g} von kleiner -20 °C, bevorzugt kleiner -30 °C aufweisen,
wobei die Glasübergangstemperatur T_{g} einer Polymerprobe durch dynamische Differenzkalorimetrie (DSC, DIN EN ISO 11357-2:2014-07 "Kunststoffe - Dynamische Differenz Thermoanalyse (DSC) - Teil 2: Bestimmung der Glasübergangstemperatur und der Glasübergangsstufenhöhe (ISO 11357-2:2013), Deutsche Fassung EN ISO 11357-2:2014") bestimmt wird,
wobei die Dachabdichtung in einem ausgehärteten Zustand bei Temperaturen bis mindestens TL3, bevorzugt TL4, nach ETAG 005, Teil 1, flexibel mit einer Einstufung W3 nach der Durchführung eines im EOTA TR-008 angegebenen Verfahrens und rissüberbrückend für Risse bis mindestens 1,5 mm nach der Durchführung eines im EOTA TR-013 angegebenen Verfahrens ausgebildet ist.

10. Dachabdichtung nach Anspruch 9,
**dadurch gekennzeichnet, dass** die Dachabdichtung in einem ausgehärteten Zustand bei Temperaturen bis mindestens TL3, bevorzugt TL4, nach ETAG 005, Teil 1, stoßbeständig mit einer Einstufung P4 nach der Durchführung eines im EOTA TR-006 angegebenen Verfahrens ausgebildet ist.

11. Dachabdichtung nach einem der Ansprüche 9 oder 10,
**dadurch gekennzeichnet, dass** die Dachabdichtung in einem ausgehärteten Zustand bei Temperaturen bis mindestens TH4 nach ETAG 005, Teil 1, stoßbeständig mit einer Einstufung P4 nach der Durchführung eines im EOTA TR-007 angegebenen Verfahrens ausgebildet ist.

12. Dachabdichtung nach einem der Ansprüche 9 bis 11,
**dadurch gekennzeichnet, dass** die Dachabdichtung in einem ausgehärteten Zustand bei Temperaturen bis mindestens TL3, bevorzugt TL4, flexibel nach einer Prüfung in Anlehnung an Kaltbiegeverhalten nach DIN 52123 ist, wie in der Beschreibung ausgeführt.

## Claims

1. Use of a reactive liquid applied roof waterproofing product for producing a roofing membrane, the reactive liquid applied roof waterproofing product having a liquid component and a powder component,
the powder component comprising a mineral binder system consisting of a plurality of mineral binders capable of forming an ettringite phase in combination and the liquid component comprising one or more aqueous polymer dispersions,
the reactive liquid applied roof waterproofing product comprising, in the liquid component, 30-70 percent by weight, preferably 50-60 percent by weight of a polymer, where the specification refers to the solids content of polymers in the polymer dispersion and the specification of percent by weight refers to the weight of the liquid component,
a proportion of a PU polymer being at most 30% of the solids content of polymers, based on the total mass of the polymers,
**characterized in that** the reactive waterproofing product contains at least 2 times, preferably at least 2.5 times, in particular at least 3 times as much percent by weight solids content of polymers as percent by weight mineral binder, and at most 5 times as much percent by weight solids content of polymers as percent by weight mineral binder, where the specification of percent by weight refers to the weight of the reactive liquid applied waterproofing product,
and that at least 80 wt.-% of the polymers used, based on the total mass of the polymers, has a glass transition temperature T_{g} of less than -20 °C, preferably less than -30 °C,
the glass transition temperature T_{g} of a polymer sample being determined by means of differential scanning calorimetry (DSC, DIN EN ISO 11357-2:2014-07 "Kunststoffe Dynamische Differenz Thermoanalyse (DSC) - Teil 2: Bestimmung der Glasübergangstemperatur und der Glasübergangsstufenhöhe (ISO 11357-2:2013), Deutsche Fassung EN ISO 11357-2:2014").

2. Use according to claim 1, **characterized in that** at least 90% by weight, preferably 100% by weight of the polymers used, based on the total mass of the polymers, have a glass transition temperature T_{g} of less than -20 °C, preferably less than -30 °C.

3. Use according to any one of the preceding claims, **characterized in that** the proportion of the PU polymer is at most 20%, preferably at most 15% of the solids content of polymers, based on the total mass of the polymers.

4. Use according to any one of the preceding claims, **characterized in that** the reactive liquid applied building material contains, in the powder component, 10-30 percent by weight, preferably 15-20 percent by weight mineral binder,
where the specification of percent by weight refers to the weight of the reactive liquid applied waterproofing product.

5. Use according to any one of the preceding claims, **characterized in that** at least one of the polymers is based on one or more monomers of the group comprising (meth)acrylates, acrylonitrile, isocyanate, polyols, or a combination thereof, or contains conditioned natural latex.

6. Use according to any one of the preceding claims, **characterized in that** at least one of the polymers is based on pure acrylate, conditioned natural latex or polyurethane.

7. Use according to any one of the preceding claims, **characterized in that** the aqueous polymer dispersion contains two or more polymers, preferably (meth)acrylate polymer and polyurethane or (meth)acrylate polymer and conditioned natural latex.

8. Use according to any one of the preceding claims, **characterized in that** the polymer dispersions have a minimum film forming temperature according to DIN 53787:02-74 of 0 °C.

9. Roofing membrane, prepared by mixing a liquid component and a powder component, the powder component comprising a mineral binder system consisting of a plurality of mineral binders capable of forming an ettringite phase in combination and the liquid component comprising one or more aqueous polymer dispersions,
a proportion of a PU polymer being at most 30% of the solids content of polymers, based on the total mass of the polymers,
**characterized in that** the roofing membrane contains at least 2 times, preferably at least 2.5 times, in particular at least 3 times as much percent by weight solids content of polymers as percent by weight mineral binder, and at most 5 times as much percent by weight solids content of polymers as percent by weight mineral binder, where the specification of percent by weight refers to the weight of the reactive waterproofing product,
and that at least 80 wt.-% of the polymers used, based on the total mass of the polymers, have a glass transition temperature T_{g} of less than -20 °C, preferably less than - 30 °C,
the glass transition temperature T_{g} of a polymer sample being determined by means of differential scanning calorimetry (DSC, DIN EN ISO 11357-2:2014-07 "Kunststoffe Dynamische Differenz Thermoanalyse (DSC) - Teil 2: Bestimmung der Glasübergangstemperatur und der Glasübergangsstufenhöhe (ISO 11357-2:2013), Deutsche Fassung EN ISO 11357-2:2014"),
the roofing membrane in a cured state at temperatures up to at least TL3, preferably TL4, according to ETAG 005, Part 1, being flexible with a classification W3 after performing a process specified in EOTA TR-008 and crack bridging for cracks up to at least 1.5 mm after performing a process specified in EOTA TR-013.

10. Roofing membrane according to claim 9, **characterized in that** the roofing membrane in a cured state at temperatures up to at least TL3, preferably TL4, according to ETAG 005, Part 1, is designed to be shock-resistant with a classification P4 after performing a process specified in EOTA TR-006.

11. Roofing membrane according to any one of claims 9 or 10, **characterized in that** the roofing membrane in a cured state at temperatures up to at least TH4 according to ETAG 005, Part 1, is designed to be shock-resistant with a classification P4 after performing a process specified in EOTA TR-007.

12. Roofing membrane according to any one of claims 9 to 11, **characterized in that** the roofing membrane in a cured state at temperatures up to at least TL3, preferably TL4, is flexible after a test based on cold bending behaviour according to DIN 52123 as explained in the description.

## Revendications

1. Utilisation d'un moyen d'étanchéité réactif pour toiture devant être appliqué sous forme liquide pour fabriquer une membrane de toiture, le moyen d'étanchéité réactif pour toiture devant être appliqué sous forme liquide présentant une composante liquide et une composante pulvérulente,
dans laquelle la composante pulvérulente comprend un système de liant minéral composé de plusieurs liant minéraux combinés capables de réaliser une phase d'ettringite et la composante liquide comprend une ou plusieurs dispersions polymères aqueuses,
dans laquelle le moyen d'étanchéité réactif pour toiture devant être appliqué sous forme liquide dans la composante liquide comprend
| | %m | %m préféré |
|---|---|---|
| polymère | 30 - 70 | 50 - 60 |
dans laquelle l'indication de la teneur en solides de polymères dans la dispersion polymère et l'indication en %m se rapportent au poids de la composante liquide,
dans laquelle une part d'un polymère PU s'élève au plus à 30 % de la teneur en solides de polymères, rapportés à la masse totale des polymères,
**caractérisée en ce que**
le moyen d'étanchéité réactif pour toiture contient au moins 2 fois, de préférence au moins 2,5 fois, en particulier au moins 3 fois une teneur en solides en %m de polymères par rapport à des liants minéraux en %m, et au plus 5 fois une teneur en solides polymères par rapport à des liants minéraux en %m, l'indication en %m se rapportant au poids du moyen d'étanchéité réactif pour toiture devant être appliqué,
et **en ce que**
au moins 80 %m des polymères utilisés, rapportés à la masse totale des polymères, présentent une température de transition vitreuse T_{g} inférieure à -20 °C, de préférence inférieure à -30 °C,
dans laquelle la température de transition vitreuse T_{g} d'un échantillon polymère est déterminée par calorimétrie différentielle dynamique (DSC, DIN EN ISO 11357-2:2014-07 "Kunststoffe Dynamische Differenz Thermoanalyse (DSC) - Teil 2: Bestimmung der Glasübergangstemperatur und der Glasübergangsstufenhöhe (ISO 11357-2:2013), Deutsche Fassung EN ISO 11357-2:2014")).

2. Utilisation selon la revendication 1,
**caractérisée en ce que**
au moins 90 %m, de préférence 100 %m, des polymères utilisés, rapportés à la masse totale des polymères, présentent une température de transition vitreuse T_{g} inférieure à -20 °C, de préférence inférieure à -30 °C.

3. Utilisation selon l'une des revendications précédentes,
**caractérisée en ce que**
la part de polymère PU s'élève au plus à 20 %, de préférence au plus à 15 %, de la teneur en solides de polymères, rapportés à la masse totale des polymères.

4. Utilisation selon l'une des revendications précédentes,
**caractérisée en ce que**
le composant réactif devant être appliqué sous forme liquide dans la composante pulvérulente contient
| | %m | %m préféré |
|---|---|---|
| liants minéraux | 10 - 30 | 15 - 20 |
dans laquelle l'indication en %m se rapporte au poids du moyen d'étanchéité réactif pour toiture devant être appliqué sous forme liquide.

5. Utilisation selon l'une des revendications précédentes,
**caractérisée en ce que**
l'un au moins des polymères est à base d'un ou de plusieurs monomères parmi le groupe comprenant un (méth)acrylate, un acrylonitrile, un isocyanate, un polyol ou une combinaison de ceux-ci, ou contient un latex naturel conditionné.

6. Utilisation selon l'une des revendications précédentes,
**caractérisée en ce que**
l'un au moins des polymères est à base d'acrylate pure, de latex naturel conditionné ou de polyuréthane.

7. Utilisation selon l'une des revendications précédentes,
**caractérisée en ce que**
la dispersion polymère aqueuse contient deux ou plusieurs polymères, de préférence un polymère (méth)acrylate et un polyuréthane ou un polymère (méth)acrylate et un latex naturel conditionné.

8. Utilisation selon l'une des revendications précédentes,
**caractérisée en ce que**
les dispersions polymères présentent une température filmogène minimale selon la norme DIN 53787:02-74 de 0 °C.

9. Membrane de toiture, fabriquée en mélangeant une composante liquide et une composante pulvérulente, dans laquelle la composante pulvérulente comprend un système de liant minéral composé de plusieurs liant minéraux combinés capables de réaliser une phase d'ettringite et la composante liquide comprend une ou plusieurs dispersions polymères aqueuses,
dans laquelle une part d'un polymère PU s'élève au plus à 30 % de la teneur en solides de polymères, rapportés à la masse totale des polymères,
**caractérisée en ce que**
la membrane de toiture contient au moins 2 fois, de préférence au moins 2,5 fois, en particulier au moins 3 fois une teneur en solides en %m de polymères par rapport à des liants minéraux en %m, et au plus 5 fois une teneur en solides polymères en %m par rapport à des liants minéraux en %m, l'indication en %m se rapportant au poids du moyen d'étanchéité réactif pour toiture,
et **en ce que**
au moins 80 %m des polymères utilisés, rapportés à la masse totale des polymères, présentent une température de transition vitreuse T_{g} inférieure à -20 °C, de préférence inférieure à -30 °C,
dans laquelle la température de transition vitreuse T_{g} d'un échantillon polymère est déterminée par calorimétrie différentielle dynamique (DSC, DIN EN ISO 11357-2:2014-07 "Kunststoffe Dynamische Differenz Thermoanalyse (DSC) - Teil 2: Bestimmung der Glasübergangstemperatur und der Glasübergangsstufenhöhe (ISO 11357-2:2013), Deutsche Fassung EN ISO 11357-2:2014")),
dans laquelle la membrane de toiture est réalisée dans un état durci à des températures jusqu'à au moins TL3, de préférence TL4, selon ETAG 005, partie 1, de manière flexible avec une classification W3 selon l'exécution d'un procédé indiqué dans EOTA TR-008 et de manière à ponter des fissures jusqu'à au moins 1,5 mm selon l'exécution d'un procédé indiqué dans EOTA TR-013.

10. Membrane de toiture selon la revendication 9,
**caractérisée en ce que**
la membrane de toiture est réalisée dans un état durci à des températures jusqu'à au moins TL3, de préférence TL4, selon ETAG 005, partie 1, de manière à résister aux chocs avec une classification P4 selon l'exécution d'un procédé indiqué dans EOTA TR-006.

11. Membrane de toiture selon la revendication 9 ou 10,
**caractérisée en ce que**
la membrane de toiture est réalisée dans un état durci à des températures jusqu'à au moins TH4 selon ETAG 005, partie 1, de manière à résister aux chocs avec une classification P4 selon l'exécution d'un procédé indiqué dans EOTA TR-007.

12. Membrane de toiture selon l'une des revendications 9 à 11,
**caractérisée en ce que**
la membrane de toiture est réalisée dans un état durci à des températures jusqu'à au moins TL3, de préférence TL4, de manière flexible selon un essai conforme au comportement en flexion à froid selon la norme DIN 52123, comme décrit dans la description.
